# EUROPEAN PATENT APPLICATION

(11) **EP 4 700 517 A1**
(43) Date of publication of application: **25.02.2026**
(21) Application number: 25786312.6
(22) Date of filing: 07.04.2025
(51) Int. Cl.: G05B 23/02

(54) **STATE IDENTIFICATION DEVICE**

(30) Priority: 09.04.2024 WO PCT/JP2024/014433
(71) Applicant: Yamaha Hatsudoki Kabushiki Kaisha, Iwata-shi, Shizuoka 438-8501 (JP)
(72) Inventor: KUMAGAI, Kenichi, Iwata-shi, Shizuoka 438-8501 (JP)
(74) Representative: Stöckeler, Ferdinand
(86) International application number: PCT/JP2025/013870
(87) International publication number: WO 2025/216215

(57) **Abstract**

A state identification device (1) causes a processor (2) to perform a process of obtaining physical parameters from a detector (50) configured to monitor a monitoring target, a process of performing a determination by discriminators (10) including at least a first discriminator and a second discriminator using an MT method, by using the physical parameters, and a process of outputting an identification signal indicating whether the state of the monitoring target belongs to a single predetermined state based on determination results of the discriminators. The first discriminator (11) shifts the operation such that a process performed by the state identification device is terminated without going through a process performed by another discriminator and a process of outputting the identification signal or such that a process performed by the first discriminator is looped. The second discriminator (12) is a discriminator, to which a shift occurs after the process performed by the first discriminator connected in series with the second discriminator, or shift the operation such that a process performed by the state identification device is terminated without going through both a process performed by another discriminator and the process of outputting the identification signal or such that a process performed by the second discriminator is looped.

## Description

### [Technical Field]

The present teaching relates to a state identification device which is configured to output an identification signal indicating whether the state of a monitoring target belongs to a single predetermined state.

### [Background Art]

In various technical fields, various state identification devices each of which is configured to output an identification signal indicating whether the state of a monitoring target belongs to a predetermined state have been used. For example, various state identification devices have been used in a technical field of engine-equipped devices. For example, Patent Literature 1 discloses a state identification device which is configured to output an identification signal indicating whether a catalyst that purifies exhaust gas exhausted from an engine is in a deterioration state. For example, Patent Literature 2 discloses a state identification device which is configured to output an identification signal indicating whether an engine is in a misfire state. The state identification device of Patent Literature 2 identifies whether the engine is in the misfire state by analyzing a signal of an engine rotation speed sensor in a detailed manner.

In addition to the above, various state identification devices each of which is configured to output an identification signal indicating whether the state of a monitoring target belongs to a predetermined state by using a Mahalanobis-Taguchi Method (MT Method) have been proposed. For example, Patent Literature 3 discloses a state identification device which is configured to output an identification signal indicating whether knocking is occurring by using the MT method. Furthermore, for example, Patent Literature 4 discloses a state identification device which is configured to output an identification signal indicating whether an engine is in a misfire state by using the MT method.

In addition to the above, a state identification device including plural discriminators using the MT method has been disclosed. For example, Patent Literature 5 discloses a device which includes plural discriminators using the MT method and is configured to identify whether a processing apparatus is in an abnormal state. In the state identification device of Patent Literature 5, discriminators using three MT methods are connected in series in order to identify three types of abnormal states stepwise.

### [Citation List]

### [Patent Literatures]

[Patent Literature 1] International Publication No. 2021/182584
[Patent Literature 2] International Publication No. 2016/194953
[Patent Literature 3] Japanese Laid-Open Patent Publication No. 2020-056331
[Patent Literature 4] Japanese Laid-Open Patent Publication No. 2010-014065
[Patent Literature 5] Japanese Laid-Open Patent Publication No. 2021-163054

### [Summary]

### [Technical Problem]

In a state identification device that does not use the MT method such as those disclosed in Patent Literature 1 and Patent Literature 2, the computational load is high for the purpose of achieving high identification accuracy. On this account, high-performance hardware resources such as a high-performance processor and a large-capacity memory are required. The degree of freedom in designing the hardware resources of the state identification device is therefore low. On the other hand, in a state identification device using the MT method, the computational load is reduced while the identification accuracy is improved in comparison with a state identification device which does not use the MT method. As the computational load is reduced, it is possible to increase the degree of freedom in designing the hardware resources of the state identification device. For the state identification device configured to identify the state of a monitoring target by using discriminators using the MT method, it has been demanded to improve the degree of freedom in designing hardware resources by further improving the efficiency of an identification process, while maintaining high identification accuracy.

An object of the present teaching is to propose a state identification device configured to identify the state of a monitoring target by using discriminators using the MT method, in which the degree of freedom in designing hardware resources is further improved by further improving the efficiency of an identification process, while high identification accuracy is maintained.

### [Solution to Problem]

(1) A state identification device of an embodiment of the present teaching has the following features.
   The state identification device is configured to output an identification signal indicating whether a state of a monitoring target belongs to a single predetermined state,
   the state identification device comprising a processor and a storage device operably coupled with the processor,
   the storage device storing a program executed by the processor,
   the program causing the state identification device to:
      (A) obtain plural physical parameters from at least one detector monitoring the monitoring target;
      (B) perform a determination by plural discriminators by using the obtained physical parameters; and
      (C) output an identification signal indicating whether the state of the monitoring target belongs to the single
   predetermined state based on a determination result of at least one of the discriminators,
   the discriminators including at least a first discriminator and a second discriminator which use a Mahalanobis-Taguchi Method,
   the first discriminator being a discriminator configured to determine whether a first condition is satisfied by calculating a Mahalanobis' distance of a first parameter set selected from the obtained physical parameters and comparing the calculated Mahalanobis' distance with a first threshold, in a first unit space composed of a first average vector and a first variance-covariance matrix which are calculated in advance, and shift an operation such that a process performed by the state identification device is terminated without going through both a process performed by any of the discriminators and a process of outputting the identification signal or such that a process performed by the first discriminator is looped, when a comparison result of the first discriminator is one of satisfaction and non-satisfaction of the first condition, and
   the second discriminator being a discriminator configured to determine whether a second condition is satisfied by calculating a Mahalanobis' distance of a second parameter set selected from the obtained physical parameters and comparing the calculated Mahalanobis' distance with a second threshold, in a second unit space different from the first unit space and composed of a second average vector and a second variance-covariance matrix which are calculated in advance, and the second discriminator being at least one of a discriminator (i) or a discriminator (ii),
   the discriminator (i) being connected in series with the first discriminator and a shift to the discriminator (i) occurring after the process performed by the first discriminator, when the comparison result of the first discriminator is the other of the satisfaction and the non-satisfaction of the first condition, and
   the discriminator (ii) is configured to shift the operation such that a process performed by the state identification device is terminated without shifting to the process performed by any of the discriminators and the process of outputting the identification signal or such that a process performed by the second discriminator is looped, when the comparison result is one of satisfaction and non-satisfaction of the second condition.

With the state identification device which is configured to identify the state of a monitoring target by using plural discriminators using the MT method, the computational load is reduced as compared to a state identification device which does not use the MT method. However, calculation of a Mahalanobis' distance requires a matrix computation process using an average vector and a variance-covariance matrix, and therefore requires high-load computation in multidimensional data processing. In these processes, a floating-point unit of the processor is heavily used, and memory must be allocated for a mean vector and a variance-covariance matrix, resulting in frequent memory accesses.

According to the configuration above, (i) either a discriminator which terminates the process performed by the state identification device without shifting to the process performed by one of the discriminators and the process of outputting the identification signal or a discriminator to which a shift occurs such that the process performed by the discriminator is looped is provided as a first stage of two discriminators that are connected in series and use the MT method. In place of or in addition to the discriminator (i), (ii), plural discriminators are provided, which are either discriminators which terminate the process performed by the state identification device without shifting to the process performed by one of the discriminators and the process of outputting the identification signal or discriminators, to which a shift occurs such that the process performed by the discriminators is looped.

When (i) either a discriminator which terminates the process performed by the state identification device without shifting to the process performed by one of the discriminators and the process of outputting the identification signal or a discriminator, to which a shift occurs such that the process performed by the discriminator is looped, is provided as a first stage of two discriminators that are connected in series and use the MT method, a shift occurs such that the process performed by the identification determination device is terminated or the process performed by the discriminator is looped when a particular condition is established. On this account, it is unnecessary to perform high-load computation by the second-stage discriminator among the discriminators that are connected in series. When (ii) plural discriminators are provided, which are either discriminators which terminate the process performed by the state identification device without shifting to the process performed by one of the discriminators and the process of outputting the identification signal or discriminators, to which a shift occurs such that the process performed by the discriminators is looped, extensive branching and complex branching can be flexibly dealt with in the process performed by the state identification device, and a shift occurs such that the process performed by the state identification device is terminated or the process performed by the discriminators is looped when a specific condition is established. On this account, it is unnecessary to perform high-load computation by another discriminator.

For the reasons above, after the determination by the discriminator, both when (i) either a discriminator which terminates the process performed by the state identification device without shifting to the process performed by one of the discriminators and the process of outputting the identification signal or a discriminator, to which a shift occurs such that the process performed by the discriminator is looped, is provided as a first stage of two discriminators that are connected in series and use the MT method and when (ii) plural discriminators are provided, which are either discriminators which terminate the process performed by the state identification device without shifting to the process performed by one of the discriminators and the process of outputting the identification signal or discriminators, to which a shift occurs such that the process performed by the discriminators is looped, it is unnecessary to perform high-load computation. On this account, waste of hardware resources (a memory, a CPU, an I/O device, etc.) is prevented, processing delays are reduced, and the efficiency of the process performed by the state identification device is further improved. As a result, it is possible to improve the degree of freedom in designing hardware resources by further improving the efficiency of the identification process, while maintaining high identification accuracy by means of the MT method.

(2) The state identification device of the embodiment of the present teaching may have the following feature in addition to the features of the arrangement (1).

The second parameter set includes at least one of the physical parameters of the first parameter set.

According to this configuration, the first discriminator and the second discriminator calculate Mahalanobis' distances by using physical parameter sets that are partially identical with each other. Due to this, the computational load when the first discriminator and the second discriminator execute processes by the MT method may be reduced.

(3) The state identification device of the embodiment of the present teaching may have the following features in addition to the feature of the arrangement (2).

The state identification device outputs an identification signal indicating whether an engine mounted on a vehicle running on a road surface is in a misfire state,
the first discriminator is configured to determine whether the road surface is flat, and
the second discriminator determines whether intermittent misfire in which misfire intermittently occurs is occurring in one or more cylinders of the engine, the second discriminator is connected in series with the first discriminator, and a shift to the second discriminator and an execution of the second discriminator occur after the process performed by the first discriminator.

Between a case where the road surface is rough and a case where intermittent misfire is occurring, fluctuation of a specific physical parameter indicating the state of the engine such as disturbance in rotation speed of the engine is similar. Due to this, in order to improve the accuracy of identification of whether the misfire state is established by using the physical parameter indicating the state of the engine, it is necessary to discern a case where the road surface is rough from a case where intermittent misfire is occurring.

According to this configuration, as the first discriminator determines whether the road surface is flat by using the MT method, it is possible to improve the accuracy of identification of whether the misfire state is established by the second discriminator, while suppressing the computational load of the process performed by the state identification device. It is therefore possible to further increase the degree of freedom in designing the hardware resources of the state identification device which is configured to identify whether the engine is in the misfire state, while improving the identification accuracy of whether the engine is in the misfire state.

It is noted that an expression "misfire intermittently occurs in one cylinder" indicates that misfire intermittently occurs in one cylinder in an engine having at least one cylinder. An expression "misfire intermittently occurs in plural cylinders" indicates that misfire irregularly occurs in plural cylinders in such a way that, for example, the cylinder in which misfire occurs is switched among plural cylinders over time.

(4) The state identification device of the embodiment of the present teaching may have the following features in addition to the feature of the arrangement (3).

When the first discriminator determines that the road surface is flat, the shift to the second discriminator occurs and the second discriminator determines whether the intermittent misfire is occurring in the engine, and
when the first discriminator determines that the road surface is rough, the first discriminator is configured to shift the operation such that the process performed by the state identification device is terminated without shifting both to the process performed by the second discriminator and the process of outputting the identification signal or such that the process performed by the first discriminator is looped.

According to this configuration, when the first discriminator determines that the road surface is rough, the process performed by the state identification device is terminated without shifting both to the process of determining the occurrence of intermittent misfire in the engine performed by the second discriminator and the process of outputting the identification signal or the process performed by the first discriminator is looped. Due to this, when the road surface is not flat and is rough, which is similar to a case where intermittent misfire is occurring in terms of the state of the engine, it is possible to reduce the computational load of the process performed by the state identification device, by not performing unnecessary determination of the occurrence of intermittent misfire by the second discriminator. It is therefore possible to further increase the degree of freedom in designing the hardware resources.

In the arrangement (3) or (4), a third discriminator configured to determine whether continuous misfire occurs in a particular cylinder of the engine by using a Mahalanobis-Taguchi Method may be included. This third discriminator may be connected to the first discriminator in a parallel manner, or may be connected in series with the first discriminator such that the process of the third discriminator is performed before or after the first discriminator.

In the present teaching and embodiments, a monitoring target is not particularly limited. The monitoring target may be, for example, a device or part of a device. The monitoring target may be, for example, a living creature (e.g., a human being) or part of a living creature. The monitoring target may not be a physical object. The monitoring target may be, for example, a phenomenon.

In the present teaching and embodiments, the usage of a state identification device is not particularly limited. The state identification device may be composed of plural devices that can communicate with each other.

In the present teaching and embodiments, a processor includes a microcontroller, a central processing unit (CPU), a micro processor, a multiprocessor, an application specific integrated circuit (ASIC), a programmable logic circuit (PLC), a field programmable gate array (FPGA), and any other circuits.

A storage device is operably coupled with a processor and stores a program executed by the processor. The program causes the state identification device to perform various processes by means of the processor. In addition, the storage device stores data of a unit space that is set in advance. The storage device encompasses a non-transitory recording medium that stores a program and data of a unit space. The storage device encompasses, for example, a semiconductor memory such as a resistor and a cash memory, a main memory (a main storage or a RAM), and a storage (an external storage device or an auxiliary storage device).

In the present teaching and embodiments, a state identification device configured to output an identification signal indicating whether the state of a monitoring target belongs to a single predetermined state indicates a state identification device which is configured to identify (determine) whether the state of a monitoring target belongs to a single predetermined state and output an identification signal indicating whether the state of the monitoring target belongs to the single predetermined state.

In the present teaching and embodiments, a process of outputting an identification signal indicating whether the state of a monitoring target belongs to a single predetermined state based on a determination result of at least one of discriminators is one of the following two processes: a process of determining whether the state of a monitoring target belongs to a single predetermined state based on a determination result of one discriminator; and a process of determining whether the state of a monitoring target belongs to a single predetermined state based on determination results of plural discriminators. In the process of determining whether the state of a monitoring target belongs to a single predetermined state based on determination results of plural discriminators, the discriminators determine whether conditions different from one another are satisfied, in order to determine whether the state of the monitoring target belongs to the single predetermined state.

In the present teaching and embodiments, the state identification device outputs at least an identification signal indicating that the state of a monitoring target belongs to a single predetermined state. To output an identification signal indicating whether the state of a monitoring target belongs to a single predetermined state may be to output different signals when it is determined that the state of the monitoring target belongs to the single predetermined state and when it is determined that the monitoring target does not belong to the single predetermined state. To output an identification signal indicating whether the state of a monitoring target belongs to a single predetermined state may be to output a signal only when it is determined that the state of the monitoring target belongs to the single predetermined state. In this case, the state identification device does not output a signal indicating that the state of the monitoring target does not belong to the single predetermined state.

In the present teaching and embodiments, to output an identification signal may indicate to output an identification signal to a device outside the state identification device, or to output an identification signal to the state identification device. To output an identification signal to the state identification device may be to output an identification signal to a processor that causes the state identification device to perform various processes or to output an identification signal to a processor which is included in the state identification device and is different from a processor that causes the state identification device to perform various processes.

In the present teaching and embodiments, plural discriminators may be an identification discriminator or a condition discriminator. The identification discriminator is a discriminator configured to determine whether the state of a monitoring target belongs to a single predetermined state. The condition discriminator is a discriminator configured to determine whether a predetermined condition that is different from determination as to whether the state of a monitoring target belongs to a single predetermined state is established. At least a second discriminator among first and second discriminators may be an identification discriminator. At least a first discriminator among first and second discriminators may be a condition discriminator.

In the present teaching and embodiments, a detector is configured to monitor a monitoring target and includes sensors of various types. Physical parameters obtained from at least one detector monitoring a monitoring target may be physical parameters regarding the monitoring target, e.g., physical parameters regarding the environment around the monitoring target. In the present teaching and embodiments, physical parameters may be parameters regarding physical quantities of plural types. In the present teaching and embodiments, a parameter set indicates one or more physical parameter selected from plural physical parameters and used for determination by a discriminator. In other words, physical parameters are determination target data regarding physical quantities of plural types. The parameter set is set for each discriminator using the MT method. In the present teaching and embodiments, physical parameters included in a first parameter set may be at least partially identical with physical parameters included in a second parameter set. To put it differently, physical parameters included in a first parameter set may be exactly identical with physical parameters included in a second parameter set. Alternatively, physical parameters included in a first parameter set may be partially identical with physical parameters included in a second parameter set. Alternatively, physical parameters included in a first parameter set may be completely different from physical parameters included in a second parameter set. In the present teaching and embodiments, a physical parameter may be data obtained from one detector, data generated by a state identification device from a signal obtained from one detector, or data generated by a state identification device from plural signals obtained from plural detectors. A physical parameter may include data of a signal output from a sensor (detector), for example. A physical parameter may include data generated by a state identification device from a signal output from a sensor (detector), for example. For example, a physical parameter may include data of a signal which is generated by a controller (detector) performing different control from a state identification device from a signal output from a sensor, and which is output from the controller. A physical parameter may include image data taken and generated by a camera included in an imaging device (detector), for example. The image data is data regarding a physical parameter such as brightness. A physical parameter may include time series data, for example. The number of types of physical parameters obtained by one discriminator may be identical with, smaller than, or larger than the number of detectors obtaining the physical parameters. When detectors used for obtaining two physical parameters are of different types, the two physical parameters are different from each other in terms of at least one type of physical quantities. However, even when two physical parameters are different from each other in terms of at least one type of physical quantities, detectors used for obtaining the two physical parameters may not always be of different types.

In the present teaching and embodiments, the above-described process (A) may be continuously executed during the above-described process (B). That is to say, the process in which the state identification device obtains plural physical parameters from at least one detector monitoring the monitoring target may be executed while the state identification device is executing the process of performing a determination by plural discriminators by using the obtained physical parameters.

In the present teaching and embodiments, a first unit space and a second unit space that are set respectively for the first discriminator and the second discriminator using the MT method are different from each other. One unit space is set for each discriminator using the MT method. A unit space is set in advance by the MT method, based on a reference data group. The Mahalanobis' distance indicates the distance from a unit space. The closer the Mahalanobis' distance is to 1, the closer a parameter set that is a target of determination of a discriminator is to a reference data group. In the field of quality engineering in which the Mahalanobis' distance is used, a squared value of the Mahalanobis' distance may be termed a Mahalanobis' distance. The reference data group based on which a unit space used by a discriminator is set may be a data group when the state of a monitoring target belongs to a single predetermined state or may be a data group when the state of the monitoring target does not belong to the single predetermined state. A unit space is set based on at least one type of a feature quantity indicating a feature of a reference data group. A discriminator using the MT method is configured to sample a feature quantity of at least one type from a parameter set and calculate a Mahalanobis' distance based on the sampled feature quantity of the at least one type and a unit space. A discriminator may use plural types of feature quantities for calculating a single Mahalanobis' distance. Even when physical parameters of a first parameter set and a second parameter set are completely identical, a unit space used by the first discriminator for calculating a Mahalanobis' distance is different from a unit space used by the second discriminator for calculating a Mahalanobis' distance. The difference between the two unit spaces may be a difference in the type of the feature quantity, for example. In the present embodiment, the first discriminator and the second discriminator calculate Mahalanobis' distances without depending on each other. Among the discriminators, all discriminators using the MT method may calculate Mahalanobis' distances without depending on each other. The calculation of Mahalanobis' distances without depending on each other indicates that one discriminator calculates a Mahalanobis' distance without being based on a Mahalanobis' distance calculated by another discriminator.

In the present teaching and embodiments, to shift to a first discriminator such that a process performed by the first discriminator is looped may be to perform a loop such that, after determination by the first discriminator, the process performed by the first discriminator is executed again, or may be to perform a loop such that, after determination by the first discriminator, a process that is executed before the process performed by the first discriminator is performed and then the process performed by the first discriminator is executed again. Likewise, in the present teaching and embodiments, to shift to a second discriminator such that a process performed by the second discriminator is looped may be to perform a loop such that, after determination by the second discriminator, the process performed by the second discriminator is executed again, or may be to perform a loop such that, after determination by the second discriminator, a process that is executed before the process performed by the second discriminator is executed and then the process performed by the second discriminator is executed again.

In the present teaching and embodiments, to loop the process performed by the first discriminator is to repeat the process performed by the first discriminator until a comparison result of the first discriminator becomes the other of satisfaction and non-satisfaction of a first condition. To loop the process performed by the second discriminator is to repeat the process performed by the second discriminator until a comparison result of the second discriminator becomes the other of satisfaction and non-satisfaction of a second condition.

In the present teaching and embodiments, discriminators may include at least one non-MT discriminator configured to perform a determination without using the MT method. The at least one non-MT discriminator configured to perform a determination without using the MT method may include a non-MT discriminator configured to determine whether the state of a monitoring target belongs to a single predetermined state. The at least one non-MT discriminator configured to perform a determination without using the MT method may include a non-MT discriminator configured to determine whether a predetermined condition which is different from determination of whether the state of a monitoring target belongs to a single predetermined state is established.

In the present teaching, when the number of constituent features is not clearly specified and the constituent feature is expressed in a singular form in English, the number of the constituent features may be more than one in the present teaching. In the present teaching, the number of the constituent features may be only one.

In the present teaching and embodiments, terms "including", "having", "comprising", and derivatives thereof are used to encompass not only listed items and equivalents thereof but also additional items.

Unless defined otherwise, all terms (including technical and scientific terms) used in this description and the present teaching have the same meaning as commonly understood by one of ordinary skill in the art to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. The term "preferable" means "preferable but not limited to". In the present specification, the configuration described as "preferable" exhibits at least the above effect obtained by the present teaching.

In addition, in the present specification, the term "may" is non-exclusive. The term "may" indicate "may but not must". In the present specification, "may" implicitly encompasses "may not". In this specification, an arrangement which is explained by using the term "may" exerts at least the above-described effects of the present teaching.

Before describing embodiments of the present teaching in detail, it is to be understood that the present teaching is not limited to the details of construction and arrangement of the components set forth in the following description or illustrated in the drawings. The present teaching is also applicable to embodiments other than the embodiments described later. The present teaching may be implemented as various modifications of the below-described embodiment.

### [Advantageous Effects]

With the state identification device of the present teaching, which is configured to identify the state of a monitoring target by using discriminators using the MT method, it is possible to improve the degree of freedom in designing hardware resources by further improving the efficiency of an identification process, while maintaining high identification accuracy.

### [Brief Description of Drawings]

FIG. 1 illustrates the configuration of a state identification device of a First Embodiment of the present teaching.
FIG. 2(a) to FIG. 2(c) are flow charts showing processes executed by a state identification device of a modification of the First Embodiment of the present teaching.
FIG. 3(a) to FIG. 3(e) are flow charts showing processes executed by the state identification device of the modification of the First Embodiment of the present teaching.
FIG. 4 is a flow chart showing a process executed by a state identification device of a Second Embodiment of the present teaching.
FIG. 5 illustrates the configuration of the state identification device of the Second Embodiment of the present teaching.
FIG. 6 is a map used by an intermittent misfire identification discriminator of the state identification device of the Second Embodiment of the present teaching for estimating a misfire rate.
FIG. 7(a) to FIG. 7(d) are graphs showing changes over time of throttle opening degree, vehicle speed, and engine rotation speed of a vehicle to which the state identification device of the Second Embodiment is applied.
FIG. 8(a) to FIG. 8(c) are graphs showing changes over time of throttle opening degree, vehicle speed, engine rotation speed, and Mahalanobis' distance calculated by a condition discriminator of the vehicle to which the state identification device of the Second Embodiment is applied.
FIG. 9(a) and FIG. 9(b) are graphs showing changes over time of misfire rate, intake air amount, engine rotation speed, and Mahalanobis' distance calculated by an intermittent misfire identification discriminator of the vehicle to which the state identification device of the Second Embodiment is applied.
FIG. 10 is a graph in which a part of FIG. 9(a) is enlarged.
FIG. 11(a) and FIG. 11(b) are graphs showing changes over time of throttle opening degree, vehicle speed, engine rotation speed, feedback correction coefficient, and Mahalanobis' distance calculated by a continuous misfire identification discriminator of the vehicle to which the state identification device of the Second Embodiment is applied.
FIG. 12 is a graph in which a part of FIG. 11(a) is enlarged.

### <First Embodiment>

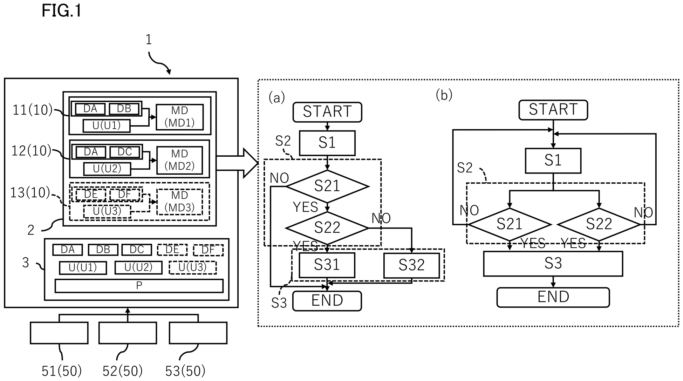

The following will describe a state identification device 1 of the First Embodiment of the present teaching with reference to FIG. 1. The state identification device 1 is configured to output an identification signal indicating whether the state of a monitoring target belongs to a single predetermined state. The state identification device 1 includes a processor 2 and a storage device 3 operably coupled with the processor 2. The storage device 3 stores a program P executed by the processor 2. The program P executed by the processor 2 causes the state identification device 1 to perform various processes. Part of the various processes that the state identification device 1 executes under the control of the program P causes the processor 2 to function as plural discriminators 10. The discriminators 10 include a discriminator configured to perform a determination by using at least two or more MT methods. The discriminator configured to perform a determination by using at least two or more MT methods includes a first discriminator 11 and a second discriminator 12.

The discriminators 10 of the First Embodiment are the first discriminator 11 and the second discriminator 12 indicated by solid lines in FIG. 1. The discriminators 10 may be three discriminators that are the first discriminator 11, the second discriminator 12, and a third discriminator 13 indicated by two-dot chain lines in FIG. 1. The number of the discriminators 10 may be four or more. Each of the discriminators 10 may be a condition discriminator or an identification discriminator.

The state identification device 1 is configured to obtain plural physical parameters from at least one detector 50 monitoring a monitoring target. At least one detector 50 of the First Embodiment shown in FIG. 1 are a first detector 51, a second detector 52, and a third detector 53. The number of the at least one detector 50 may be one, two, or four or more. The state identification device 1 of the First Embodiment shown in FIG. 1 is arranged to be directly connected to the first detector 51, the second detector 52, and the third detector 53 so as to obtain physical parameters from these detectors 50. Alternatively, the state identification device 1 may not be directly connected to at least one detector 50, may be connected to at least one detector 50 through another device, and may obtain physical parameters from the at least one detector 50. Alternatively, the state identification device 1 may be directly connected to at least one of plural detectors 50, may be connected to the remaining at least one detectors 50 through another device, and may obtain physical parameters from the plural detectors 50.

The following will describe processes executed by the state identification device 1 of the First Embodiment, with reference to FIG. 1. FIG. 1(a) and FIG. 1(b) are flow charts showing examples of processes executed by the state identification device 1 of the First Embodiment. It is noted that these examples are mere examples and do not limit the First Embodiment. For example, the determination of each of the first discriminator 11 and the second discriminator 12 shown in FIG. 1(a) and FIG. 1(b) may be reversed (i.e., YES is NO and NO is YES).

In the step S1, the state identification device 1 performs a process of obtaining plural physical parameters from at least one detector 50 monitoring a monitoring target. The state identification device 1 shown in FIG. 1 obtains physical parameters DA, DB, and DC indicated by solid lines from detectors 51, 52, and 53. The state identification device 1 may obtain, from detectors 50, not only physical parameters DA, DB, and DC indicated by solid lines but also physical parameters DE and DF indicated by two-dot chain lines in FIG. 1. The obtained physical parameters are stored in the storage device 3. In the examples shown in FIG. 1(a) and FIG. 1(b), in the step S1, the state identification device 1 obtains physical parameters included in a first parameter set D1 and a second parameter set D2 which are required for determination performed by the first discriminator 11 and the second discriminator 12. The step S1 is performed as needed during the execution of the step S2. For example, the step S1 may be executed at predetermined time intervals, or may be executed each time a process of performing a determination starts at each of the discriminators 10 in the step S2.

In the step S2, the state identification device 1 performs a process of performing a determination by the discriminators 10 by using the physical parameters obtained in the step S1. In the examples shown in FIG. 1(a) and FIG. 1(b), in the step S2, a process (step S21) of performing a determination by the first discriminator 11 and a process (step S22) of performing a determination by the second discriminator 12 are executed by using the physical parameters obtained in the step S1.

To begin with, in the step S2, each discriminator 10 obtains a parameter set D selected from the physical parameters obtained in the step S1. The physical parameters in the parameter sets D obtained by any two discriminators 10 among the discriminators 10 may be at least partially identical to each other. In the state identification device 1 shown in FIG. 1, the first discriminator 11 obtains a first parameter set D1 (not illustrated) including the physical parameter DA and the physical parameter DB. The second discriminator 12 obtains a second parameter set D2 (not illustrated) including the physical parameter DA and the physical parameter DC. The third discriminator 13 obtains a third parameter set D3 (not illustrated) including the physical parameter DE and the physical parameter DF. The second parameter set D2 includes the physical parameter DA that is a part of the first parameter set D1. The third parameter set D3 does not include physical parameters included in the first parameter set D1 and the second parameter set D2. The second parameter set D2 may include the entire physical parameter DA in the first parameter set D1.

Subsequently, in the step S2, each discriminator 10 calculates a Mahalanobis' distance based on a unit space U set in advance based on the MT method and the obtained parameter set D. The number of Mahalanobis' distances calculated for determination by one discriminator 10 may be one or plural. The unit space U is composed of an average vector and a variance-covariance matrix which are calculated in advance. The unit space U is stored in the storage device 3. The unit spaces U used by the discriminators 10 for the calculation of Mahalanobis' distances MD are different from one another. In the state identification device 1 shown in FIG. 1, three discriminators 10 respectively use unit spaces U1, U2, and U3 which are different from one another. In the step S2, the discriminators 10 calculate Mahalanobis' distances MD1 without depending on each other. In the state identification device 1 shown in FIG. 1, in the unit space U1, the first discriminator 11 calculates a Mahalanobis' distance MD1 of the obtained first parameter set D1. In the unit space U2, the second discriminator 12 calculates a Mahalanobis' distance MD2 of the obtained second parameter set D2. In the unit space U3, the third discriminator 13 calculates a Mahalanobis' distance MD3 of the obtained third parameter set D3.

Subsequently, in the step S2, each discriminator 10 determines whether a condition set in advance is satisfied, by comparing the calculated Mahalanobis' distance MD with a threshold set in advance. The condition set in advance may be a condition indicating that the state of a monitoring target belongs to a single predetermined state, or a condition indicating that the state of the monitoring target belongs to a predetermined state different from the single predetermined state. In the state identification device 1 shown in FIG. 1, the first discriminator 11 determines whether the calculated Mahalanobis' distance MD1 satisfies a first condition in comparison with a first threshold. The second discriminator 12 determines whether the calculated Mahalanobis' distance MD2 satisfies a second condition in comparison with a second threshold. In the step S2, each discriminator 10 may perform a determination based on a single Mahalanobis' distance MD, or may determine whether a condition set in advance is satisfied by comparing calculated Mahalanobis' distances MD with a threshold set in advance after the number of the calculated Mahalanobis' distances MD reaches a predetermined number.

When the calculated Mahalanobis' distance MD is compared with the first threshold and the comparison result is one of satisfaction and non-satisfaction of the first condition, the first discriminator 11 performs one of the following processes. The first discriminator 11 terminates the process performed by the state identification device 1 without going through the process performed by one of the discriminators 10 and the process of outputting the identification signal. Alternatively, a shift to the first discriminator 11 occurs such that the process performed by the first discriminator 11 is looped.

In the example shown in FIG. 1(a), when the comparison result does not satisfy the first condition (NO in the step S21), the first discriminator 11 terminates the process performed by the state identification device 1 without going through the process performed by one of the discriminators 10 and the process of outputting the identification signal. Although not illustrated, when the comparison result does not satisfy the first condition (NO in the step S21), the first discriminator 11 shifts an operation such that the first discriminator 11 is looped. In the example shown in FIG. 1(a), when the comparison result satisfies the first condition (YES in the step S21), the first discriminator 11 shifts the operation to the second discriminator 12 in the step S22.

In the example shown in FIG. 1(b), when the comparison result does not satisfy the first condition (NO in the step S21), the first discriminator 11 shifts to the process of obtaining the physical parameters in the step S1 such that the process performed by the first discriminator 11 is looped. Although not illustrated, when the comparison result does not satisfy the first condition (NO in the step S21), the first discriminator 11 may terminate the process performed by the state identification device 1 without going through the process performed by one of the discriminators 10 and the process of outputting the identification signal. In the example shown in FIG. 1(a), when the comparison result satisfies the first condition (YES in the step S21), the first discriminator 11 shifts to a process of outputting the identification signal in the step S3.

The second discriminator 12 is at least one of the following discriminators (i) and (ii). The second discriminator 12 equivalent to the discriminator (i) is connected in series with the first discriminator 11 and a shift to the second discriminator 12 occurs after the process performed by the first discriminator 11, when the comparison result of the first discriminator 11 is the other of satisfaction and non-satisfaction of the first condition. The second discriminator 12 equivalent to the discriminator (ii) performs one of the following processes when the calculated Mahalanobis' distance MD is compared with the second threshold and the comparison result is one of satisfaction and non-satisfaction of the second condition. The second discriminator 12 equivalent to the discriminator (ii) terminates the process performed by the state identification device 1 without going through the process performed by one of the discriminators 10 and the process of outputting the identification signal. Alternatively, a shift to the second discriminator 12 equivalent to the discriminator (ii) occurs such that the process performed by the second discriminator 12 is looped.

In the example shown in FIG. 1(a), the second discriminator 12 is connected in series with the first discriminator 11. To put it differently, in the state identification device 1 shown in FIG. 1(a), the process of performing a determination by the second discriminator 12 is performed after the process of performing a determination by the first discriminator 11 is performed. In other words, when the first discriminator 11 and the second discriminator 12 are connected in series, the first discriminator 11 and the second discriminator 12 are logically or physically connected in series and are processed in order. The second discriminator 12 shown in FIG. 1(a) is equivalent to the discriminator (i) described above. When the comparison result of the first discriminator 11 satisfies the first condition, a shift to the second discriminator 12 shown in FIG. 1(a) occurs after the process performed by the first discriminator 11. No matter whether a result of comparing a calculated Mahalanobis' distance MD with the second threshold satisfies the second condition or not, the second discriminator 12 shown in FIG. 1(a) shifts to the process of outputting the identification signal. In the example shown in FIG. 1(a), when the comparison result satisfies the second condition (YES in the step S22), the second discriminator 12 shifts to the process of outputting the identification signal in the step S3 (S31). On the other hand, in the example shown in FIG. 1(a), when the comparison result does not satisfy the second condition (NO in the step S22), the second discriminator 12 shifts to the process of outputting the identification signal in the step S3 (S32).

**In** the example shown in FIG. 1(b), the second discriminator 12 is connected in parallel with the first discriminator 11. To put it differently, in the state identification device 1 shown in FIG. 1(b), the process of performing a determination by the second discriminator 12 is performed parallel to the process of performing a determination by the first discriminator 11. In other words, when the first discriminator 11 and the second discriminator 12 are connected in parallel, the first discriminator 11 and the second discriminator 12 are logically or physically connected in parallel and are processed in parallel. The second discriminator 12 shown in FIG. 1(b) is equivalent to the discriminator (ii) described above. In the example shown in FIG. 1(b), when the comparison result does not satisfy the second condition (NO in the step S22), the second discriminator 12 shifts to the process of obtaining the physical parameters in the step S1 such that the process performed by the second discriminator 12 is looped. Although not illustrated, when the comparison result does not satisfy the second condition (NO in the step S22), the second discriminator 12 may terminate the process performed by the state identification device 1 without going through the process performed by one of the discriminators 10 and the process of outputting the identification signal. In the example shown in FIG. 1(b), when the comparison result satisfies the second condition (YES in the step S22), the second discriminator 11 shifts to the process of outputting the identification signal in the step S3.

In the step S3, the state identification device 1 performs a process of outputting an identification signal indicating whether the state of a monitoring target belongs to a single predetermined state based on a determination result of at least one of the discriminators 10. In the example shown in FIG. 1(a), when the comparison result of the second discriminator 12 satisfies the second condition, the state identification device 1 outputs the identification signal indicating that the state of the monitoring target belongs to the single predetermined state (S31). On the other hand, in the example shown in FIG. 1(a), when the comparison result of the second discriminator 12 does not satisfy a third condition, the state identification device 1 outputs the identification signal indicating that the state of the monitoring target does not belong to the single predetermined state (S32). In the example shown in FIG. 1(b), when the comparison result of the first discriminator 11 satisfies the first condition and/or when the comparison result of the second discriminator 12 satisfies the second condition, the state identification device 1 outputs the identification signal indicating that the state of the monitoring target belongs to the single predetermined state (S3). Although not illustrated, in the example shown in FIG. 1(b), when the comparison result of the first discriminator 11 satisfies the first condition, the state identification device 1 may output an identification signal indicating that the state of the monitoring target belongs to the single predetermined state, and when the comparison result of the second discriminator 12 satisfies the second condition, the state identification device 1 may output an identification signal indicating that the state of the monitoring target does not belong to the single predetermined state.

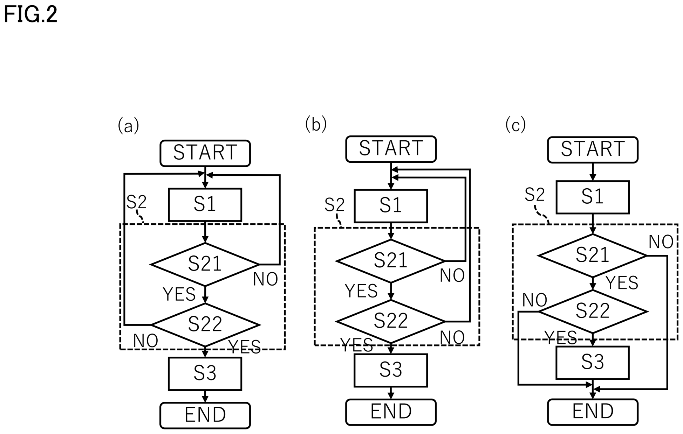

The following will describe a modification of the process performed by the state identification device 1, with reference to flow charts shown in FIG. 2(a) to FIG. 2(c). In the same manner as in FIG. 1(a) in the First Embodiment, a second discriminator 12 in each of FIG. 2(a) to FIG. 2(c) is connected in series with a first discriminator 11. FIG. 2(a) to FIG. 2(c), however, show examples of the modification of FIG. 1(a) in the First Embodiment, and do not limit the First Embodiment. The description of the step S1 is omitted because it has already been described above.

In the example shown in FIG. 2(a), when the comparison result does not satisfy the first condition (NO in the step S21), the first discriminator 11 shifts to the process of obtaining the physical parameters in the step S1 such that the process performed by the first discriminator 11 is looped. Although not illustrated, when the comparison result does not satisfy the first condition (NO in the step S21), the first discriminator 11 may terminate the process performed by the state identification device 1 without going through the process performed by one of the discriminators 10 and the process of outputting the identification signal. On the other hand, when the comparison result satisfies the first condition (YES in the step S21), the first discriminator 11 shifts the operation to the second discriminator 12. When the comparison result satisfies the second condition (YES in the step S22), the second discriminator 12 shifts to the process of outputting the identification signal in the step S3. When the comparison result does not satisfy the second condition (NO in the step S22), the second discriminator 12 shifts to the process of obtaining the physical parameters in the step S1 such that the process performed by the second discriminator 12 is looped. The second discriminator 12 shown in FIG. 2(a) is equivalent to the discriminator (i) and the discriminator (ii) described above.

In the example shown in FIG. 2(b), when the comparison result does not satisfy the first condition (NO in the step S21), the first discriminator 11 shifts to the process of obtaining the physical parameters in the step S1 such that the process performed by the first discriminator 11 is looped. Although not illustrated, when the comparison result does not satisfy the first condition (NO in the step S21), the first discriminator 11 may terminate the process performed by the state identification device 1 without going through the process performed by one of the discriminators 10 and the process of outputting the identification signal. On the other hand, when the comparison result satisfies the first condition (YES in the step S21), the first discriminator 11 shifts the operation to the second discriminator 12. When the comparison result satisfies the second condition (YES in the step S22), the second discriminator 12 shifts to the process of outputting the identification signal in the step S3. When the comparison result does not satisfy the second condition (NO in the step S22), the second discriminator 12 shifts to the process of obtaining the physical parameters in the step S1 such that the process performed by the second discriminator 12 is looped. The second discriminator 12 shown in FIG. 2(b) is equivalent to the discriminator (i) and the discriminator (ii) described above.

In the example shown in FIG. 2(c), when the comparison result does not satisfy the first condition (NO in the step S21), the first discriminator 11 terminates the process performed by the state identification device 1 without going through the process performed by one of the discriminators 10 and the process of outputting the identification signal. Although not illustrated, when the comparison result does not satisfy the first condition (NO in the step S21), a shift to the first discriminator 11 may occur such that the process performed by the first discriminator 11 is looped. On the other hand, when the comparison result satisfies the first condition (YES in the step S21), the first discriminator 11 shifts the operation to the second discriminator 12. When the comparison result satisfies the second condition (YES in the step S22), the second discriminator 12 shifts to the process of outputting the identification signal in the step S3. When the comparison result does not satisfy the second condition (NO in the step S22), the second discriminator 12 terminates the process performed by the state identification device 1 without going through the process performed by one of the discriminators 10 and the process of outputting the identification signal. The second discriminator 12 shown in FIG. 2(c) is equivalent to the discriminator (i) and the discriminator (ii) described above.

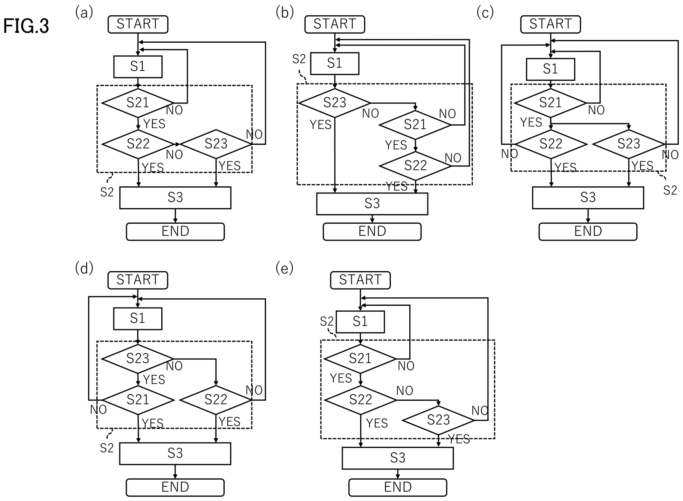

The following will describe a modification of the process performed by the state identification device 1, with reference to flow charts shown in FIG. 3(a) to FIG. 3(e). The state identification device 1 shown in each of FIG. 3(a) to FIG. 3(e) includes a first discriminator 11, a second discriminator 12, and a third discriminator 13. FIG. 3(a) to FIG. 3(e), however, show examples of the modification in the First Embodiment, and do not limit the First Embodiment. The description of the step S1 and the step S3 is omitted because they have already been described above.

In the example shown in FIG. 3(a), the second discriminator 12 is connected in series with the first discriminator 11. The third discriminator 13 is connected in series with the second discriminator 12. When the comparison result satisfies the first condition (YES in the step S21), the first discriminator 11 shifts to the process performed by the second discriminator 12. On the other hand, when the comparison result does not satisfy the first condition (NO in the step S21), the first discriminator 11 shifts to the process of obtaining the physical parameters in the step S1 such that the process performed by the first discriminator 11 is looped. When the comparison result satisfies the second condition (YES in the step S22), the second discriminator 12 shifts to the process of outputting the identification signal in the step S3. On the other hand, when the comparison result does not satisfy the second condition (NO in the step S22), the second discriminator 12 shifts the operation to the third discriminator 13. When the comparison result satisfies the third condition (YES in the step S23), the third discriminator 13 shifts to the process of outputting the identification signal in the step S3. On the other hand, when the comparison result does not satisfy the third condition (NO in the step S23), the third discriminator 13 shifts to the process of obtaining the physical parameters in the step S1 such that the process performed by the third discriminator 13 is looped. The second discriminator 12 shown in FIG. 3(a) is equivalent to the discriminator (i) described above. In the example shown in FIG. 3(a), when the second discriminator 12 is replaced with the third discriminator 13 and the third discriminator 13 is replaced with the second discriminator 12, the second discriminator 12 after the replacement is equivalent to the discriminator (ii).

**In** the example shown in FIG. 3(b), the third discriminator 13 is connected in series with the first discriminator 11. The second discriminator 12 is connected in series with the first discriminator 11. When the comparison result satisfies the third condition (YES in the step S23), the third discriminator 13 shifts to the process of outputting the identification signal in the step S3. On the other hand, when the comparison result does not satisfy the third condition (NO in the step S23), the third discriminator 13 shifts to the process performed by the first discriminator 11. When the comparison result does not satisfy the first condition (NO in the step S21), the first discriminator 11 shifts to the process of obtaining the physical parameters in the step S1 such that the process performed by the first discriminator 11 is looped. On the other hand, when the comparison result satisfies the first condition (YES in the step S21), the first discriminator 11 shifts the operation to the second discriminator 12. When the comparison result satisfies the second condition (YES in the step S22), the second discriminator 12 shifts to the process of outputting the identification signal in the step S3. On the other hand, when the comparison result does not satisfy the second condition (NO in the step S22), the second discriminator 12 shifts to the process of obtaining the physical parameters in the step S1 such that the process performed by the second discriminator 12 is looped. The second discriminator 12 shown in FIG. 3(b) is equivalent to the discriminator (i) and the discriminator (ii) described above.

In the example shown in FIG. 3(c), the second discriminator 12 is connected in series with the first discriminator 11. The third discriminator 13 is connected in series with the first discriminator 11. The second discriminator 12 and the third discriminator 13 are connected in parallel. When the comparison result satisfies the first condition (YES in the step S21), the first discriminator 11 shifts to the process performed by the second discriminator 12 and the process performed by the third discriminator 13. On the other hand, when the comparison result does not satisfy the first condition (NO in the step S21), the first discriminator 11 shifts to the process of obtaining the physical parameters in the step S1 such that the process performed by the first discriminator 11 is looped. When the comparison result satisfies the second condition (YES in the step S22), the second discriminator 12 shifts to the process of outputting the identification signal in the step S3. On the other hand, when the comparison result does not satisfy the second condition (NO in the step S22), the second discriminator 12 shifts to the process of obtaining the physical parameters in the step S1 such that the process performed by the second discriminator 12 is looped. When the comparison result satisfies the third condition (YES in the step S23), the third discriminator 13 shifts to the process of outputting the identification signal in the step S3. On the other hand, when the comparison result does not satisfy the third condition (NO in the step S23), the third discriminator 13 shifts to the process of obtaining the physical parameters in the step S1 such that the process performed by the third discriminator 13 is looped. The second discriminator 12 shown in FIG. 3(c) is equivalent to the discriminator (i) and the discriminator (ii) described above.

In the example shown in FIG. 3(d), the third discriminator 13 is connected in series with the first discriminator 11. The third discriminator 13 is connected in series with the first discriminator 11. When the comparison result satisfies the third condition (YES in the step S23), the third discriminator 13 shifts to the process performed by the first discriminator 11. On the other hand, when the comparison result does not satisfy the third condition (NO in the step S23), the third discriminator 13 shifts to the process performed by the second discriminator 12. When the comparison result satisfies the first condition (YES in the step S21), the first discriminator 11 shifts to a process of outputting the identification signal in the step S3. On the other hand, when the comparison result does not satisfy the first condition (NO in the step S21), the first discriminator 11 shifts to the process of obtaining the physical parameters in the step S1 such that the process performed by the first discriminator 11 is looped. When the comparison result satisfies the second condition (YES in the step S22), the second discriminator 12 shifts to the process of outputting the identification signal in the step S3. On the other hand, when the comparison result does not satisfy the second condition (NO in the step S22), the second discriminator 12 shifts to the process of obtaining the physical parameters in the step S1 such that the process performed by the second discriminator 12 is looped. The second discriminator 12 shown in FIG. 3(d) is equivalent to the discriminator (ii) described above.

In the example shown in FIG. 3(e), the second discriminator 12 is connected in series with the first discriminator 11. The third discriminator 13 is connected in series with the second discriminator 12. When the comparison result satisfies the first condition (YES in the step S21), the first discriminator 11 shifts to the process performed by the second discriminator 12. On the other hand, when the comparison result does not satisfy the first condition (NO in the step S21), the first discriminator 11 shifts to the process of obtaining the physical parameters in the step S1 such that the process performed by the first discriminator 11 is looped. When the comparison result satisfies the second condition (YES in the step S22), the second discriminator 12 shifts to the process of outputting the identification signal in the step S3. On the other hand, when the comparison result does not satisfy the second condition (NO in the step S22), the second discriminator 12 shifts to the process performed by the third discriminator 13. When the comparison result satisfies the third condition (YES in the step S23), the third discriminator 13 shifts to the process of outputting the identification signal in the step S3. On the other hand, when the comparison result does not satisfy the third condition (NO in the step S23), the third discriminator 13 shifts to the process of obtaining the physical parameters in the step S1 such that the process performed by the third discriminator 13 is looped. The second discriminator 12 shown in FIG. 3(e) is equivalent to the discriminator (i) described above.

The MT method is a method encompassed in the MT system. Apart from the MT method, methods encompassed in the MT system are, for example, an MTA method, an RT method, and a two-sided T method. The RT method is a method suitable for setting plural unit spaces and identifying which one of states the state of a monitoring target is, and the number of unit spaces to be set may be only one. The RT method, however, is suitable for identifying plural states by setting plural unit spaces based on a feature quantity of the same type, and is not suitable for changing the type of a feature quantity for each unit space. Furthermore, in the RT method and the MTA method, an adjoint Mahalanobis' distance used in a calculation process is difficult to deal with. In the two-sided T method and the MTA method, a unit space and a signal level need to be set, and securing the identification accuracy is difficult. In this regard, the state identification device 1 of the present embodiment, which performs determination as to whether the state of a monitoring target belongs to a single predetermined state by using discriminators each of which independently performs determination by using the MT method, makes it possible to improve the identification accuracy while suppressing the computational load.

### <Second Embodiment>

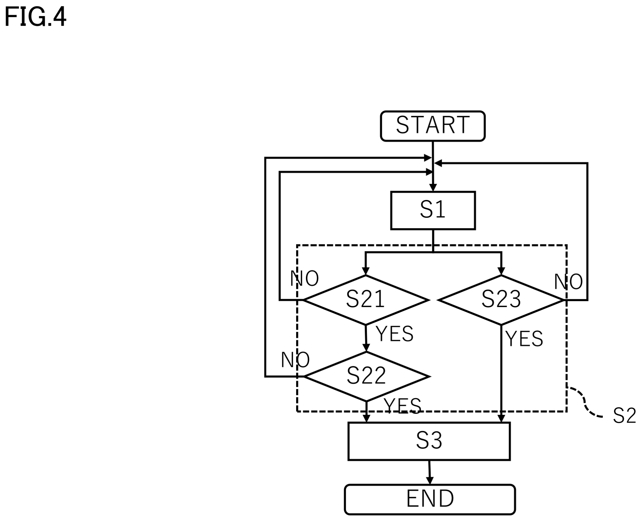

The following will describe a state identification device 1 of the Second Embodiment of the present teaching with reference to FIG. 4 to FIG. 13. The state identification device 1 of the Second Embodiment has the same configuration as the state identification device 1 of the First Embodiment. The state identification device 1 of the Second Embodiment is an example in which the state identification device of the present teaching is applied to a misfire diagnosis device which is configured to output an identification signal indicating whether an engine 40 mounted on a vehicle 30 is in a misfire state. It is noted that the example of applying the state identification device of the present teaching to the misfire diagnosis device is not limited to the Second Embodiment.

The state identification device 1 is provided in the vehicle 30. The vehicle 30 is not limited to any particular type as long as the vehicle 30 runs on a road surface. The vehicle 30 includes wheels 31 including at least one driving wheel. The driving wheel is rotated by receiving force output from the engine 40.

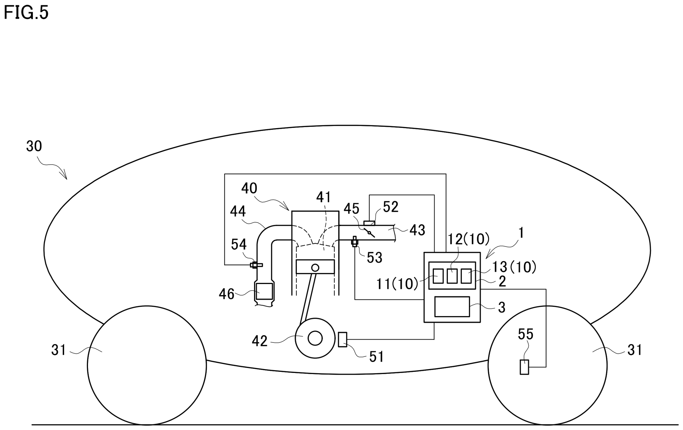

As shown in FIG. 5, the vehicle 30 includes the engine 40, a fuel supplier (not illustrated), an ignition device (not illustrated), a controller (not illustrated), a throttle valve 45, a catalyst 46, an engine rotation speed sensor 51, a throttle opening degree sensor (throttle position sensor) 52, an intake pressure sensor 53, an oxygen sensor 54, and a wheel rotation speed sensor 55. The vehicle 30 further includes a notification lamp (not illustrated) which is configured to turn on when the state identification device 1 outputs an identification signal indicating that the engine 40 is in the misfire state. The state identification device 1 performs a process of obtaining physical parameters from the controller (not illustrated), the engine rotation speed sensor 51, the throttle opening degree sensor 52, the intake pressure sensor 53, the oxygen sensor 54, and the wheel rotation speed sensor 55 which are equivalent to detectors 50 that monitor the vehicle 30 that is a monitoring target. While the controller is independent from the state identification device 1 in the present embodiment, the state identification device 1 may function as the controller.

The engine 40 includes at least one combustion chamber 41. The engine 40 may be a single-cylinder engine or a multi-cylinder engine. The combustion chamber 41 includes an unillustrated ignition device. The engine 40 includes a crankshaft 42 which is rotated as air-fuel mixture of fuel and air burns in the at least one combustion chamber 41. The power of the engine 40 is output from the crankshaft 42. The unillustrated fuel supplier is provided in the combustion chamber 41 or an intake passage 43 connected to the combustion chamber 41. The fuel supplier is configured to inject fuel to the combustion chamber 41 or the intake passage 43. The throttle valve 45 is provided to adjust an amount of air supplied to the engine 40. The throttle valve 45 may be of an electonic-controlled type or a mechanical type.

The catalyst 46 is provided in an exhaust passage 44 connected to the combustion chamber 41 and is configured to purify exhaust gas exhausted from the engine 40. The oxygen sensor 54 is provided on the exhaust passage 44 and positioned upstream of the catalyst 46 in the flow direction of exhaust gas. The upstream oxygen sensor 54 is configured to output a signal corresponding to the oxygen concentration in the exhaust gas. The oxygen sensor 54 is configured to output a signal indicating whether the oxygen concentration is higher than or lower than a predetermined oxygen concentration range. The state identification device 1 is connected to the oxygen sensor 54. The state identification device 1 is configured to obtain a signal corresponding to the oxygen concentration in the exhaust gas from the oxygen sensor 54.

The engine rotation speed sensor 51 is configured to output a signal each time the crankshaft 42 rotates by a predetermined angle. To put it differently, the sensor outputs a signal for each predetermined crank angle. The predetermined crank angle may be, for example, a 15° crank angle (hereinafter, this will be abbreviated as ° CA). The state identification device 1 is connected to the engine rotation speed sensor 51. The state identification device 1 obtains a signal at each predetermined crank angle from the engine rotation speed sensor 51. The state identification device 1 is configured to calculate engine rotation speed ES that is rotation speed of the crankshaft 42, based on a signal output from the engine rotation speed sensor 51.

The throttle opening degree sensor 52 is configured to detect the position of the throttle valve 45 and output a signal indicating the opening degree TH of the throttle valve 45. Hereinafter, the opening degree TH of the throttle valve 45 will be referred to as a throttle opening degree TH. The state identification device 1 is connected to the throttle opening degree sensor 52. The state identification device 1 obtains a signal representing the throttle opening degree TH from the throttle opening degree sensor 52. The intake pressure sensor 53 is provided between the throttle valve 45 and the combustion chamber 41 and is configured to detect the pressure of air in the intake passage 43. The state identification device 1 is connected to the throttle opening degree sensor 52. The state identification device 1 obtains a signal indicating the pressure of air in the intake passage 43 from the throttle opening degree sensor 52. For example, the state identification device 1 calculates an intake air amount IA based on calculated engine rotation speed ES, a signal of the throttle opening degree sensor 52, and a signal of the intake pressure sensor 53. The vehicle 30 may include an air flow meter (not illustrated) configured to detect the intake air amount IA. In this case, the state identification device 1 is connected to the air flow meter. The state identification device 1 obtains a signal representing the intake air amount IA from the air flow meter.

The controller is configured to control the fuel amount supplied from the fuel supplier to the combustion chamber 41. The controller controls the fuel amount based on a signal of the oxygen sensor 54 in order to maintain the air-fuel ratio of air-fuel mixture at around a target air-fuel ratio. The controller sets the fuel amount based on at least a basic fuel amount and a feedback correction coefficient FB that is set based on a signal of the oxygen sensor 54. The controller may set the fuel amount based on the basic fuel amount, the feedback correction coefficient FB, and at least one correction value. The basic fuel amount is set based on, for example, an intake air amount IA that is calculated or detected. When the controller calculates the fuel amount, the basic fuel amount is multiplied by the feedback correction coefficient FB. When the oxygen sensor 54 outputs a signal indicating that the oxygen concentration is higher than a predetermined oxygen concentration range, the controller increases the feedback correction coefficient FB so as to increase the fuel amount. When the oxygen sensor 54 outputs a signal indicating that the oxygen concentration is lower than the predetermined oxygen concentration range, the controller decreases the feedback correction coefficient FB so as to decrease the fuel amount. The feedback correction coefficient FB fluctuates around, for example, a value that is 1. The state identification device 1 is connected to the controller. The state identification device 1 obtains, from the controller, the fuel amount including the feedback correction coefficient FB and the basic fuel amount.

The wheel rotation speed sensor 55 is configured to detect the rotation speed of a wheel 31. The state identification device 1 is connected to the wheel rotation speed sensor 55. The state identification device 1 is configured to detect a signal representing the rotation speed of the wheel 31 from the wheel rotation speed sensor 55. The state identification device 1 calculates the rotation speed of the wheel 31 based on the signal output from the wheel rotation speed sensor 55. The state identification device 1 calculates the vehicle speed VS based on the calculated rotation speed of the wheel 31.

In the Second Embodiment, the number of discriminators 10 is three (see FIG. 1). The three discriminators 10 are constituted by a first discriminator 11, a second discriminator 12, and a third discriminator 13. The first discriminator 11 is a condition discriminator and is configured to determine whether the road surface on which the vehicle 30 runs is flat. The second discriminator 12 and the third discriminator 13 are configured to determine whether the engine 40 is in a misfire state. The second discriminator 12 is an intermittent misfire identification discriminator, and is configured to determine whether the engine 40 is in the misfire state by determining whether intermittent misfire occurs based on a calculated Mahalanobis' distance MD. The intermittent misfire is a phenomenon in which misfire intermittently occurs in one cylinder or plural cylinders. The third discriminator 13 is a continuous misfire identification discriminator, and is configured to determine whether the engine 40 is in the misfire state by determining whether continuous misfire occurs based on a calculated Mahalanobis' distance MD. The continuous misfire is a phenomenon in which misfire continuously occurs in a particular cylinder.

The state identification device 1 of the Second Embodiment executes determination processes of the three discriminators 10 in the order shown in FIG. 4. As shown in FIG. 4, the second discriminator 12 is connected in series with the first discriminator 11. The third discriminator 13 is connected in parallel with the first discriminator 11 and the second discriminator 12 that are connected in series. When the first discriminator 11 determines that the road surface is flat (YES in the step S21), the second discriminator 12 determines whether the engine 40 is in the misfire state due to intermittent misfire (step S22). When the first discriminator 11 determines that the road surface is rough (NO in step S21), the first discriminator 11 does not determine whether the engine 40 is in the misfire state due to intermittent misfire by means of the second discriminator 12, and shifts to a process of obtaining physical parameters in the step S1 so that the process performed by the first discriminator 11 is looped. When the second discriminator 12 determines that the engine 40 is in the misfire state due to intermittent misfire (YES in the step S22), the process shifts to a process of outputting an identification signal indicating that the engine 40 is in the misfire state (step S3). On the other hand, when the second discriminator 12 determines that the engine 40 is not in the misfire state due to intermittent misfire (YES in the step S21), the process shifts to the process of obtaining physical parameters in the step S1. Because the third discriminator 13 is connected in parallel with the first discriminator 11 and the second discriminator 12, the third discriminator 13 determines whether the engine 40 is in the misfire state due to continuous misfire without the determination of whether the road surface is flat by the first discriminator 11 (step S23). When the third discriminator 13 determines that the engine 40 is in the misfire state due to continuous misfire (YES in the step S23), the third discriminator 13 outputs an identification signal indicating that the engine 40 is in the misfire state (step S3). On the other hand, when it is determined that the engine 40 is not in the misfire state due to continuous misfire (NO in the step S23), the third discriminator 13 shifts to the process of obtaining physical parameters in the step S1. The second discriminator 12 shown in FIG. 4 is equivalent to the discriminator (i) and the discriminator (ii) described above. In the state identification device 1 of the Second Embodiment, when the first discriminator 11 that is a condition discriminator determines that the road surface is flat, the second discriminator 12 that is an intermittent identification discriminator determines whether the engine 40 is in the misfire state, and when the first discriminator 11 determines that the road surface is rough, the second discriminator 12 that is an intermittent identification discriminator does not determine whether the engine 40 is in the misfire state. No matter whether the road surface is flat, the third discriminator 13 that is a continuous identification discriminator determines whether the engine 40 is in the misfire state.

The state identification device 1 of the Second Embodiment may, for example, execute the determination processes of the three discriminators 10 in the order shown in FIG. 3(c) and FIG. 3(e).

As a first parameter set D selected from obtained physical parameters, the first discriminator 11 that is a condition discriminator obtains vehicle speed VS obtained from a signal of the wheel rotation speed sensor 55 and engine rotation speed ES obtained from a signal of the engine rotation speed sensor 51. Instead of the vehicle speed VS, the first discriminator 11 may obtain the rotation speed of the wheel 31 obtained from a signal of the wheel rotation speed sensor 55. The engine rotation speed ES obtained by the first discriminator 11 may be a value at each crank angle, which is larger than a crank angle interval at which the engine rotation speed sensor 51 outputs a signal. The engine rotation speed ES obtained by the first discriminator 11 may be data of a value per 720° CA, for example. The first discriminator 11 samples feature quantities of plural types from the first parameter set D1, and calculates a Mahalanobis' distance MD based on the sampled feature quantities of the plural types and a unit space U set in advance. A specific example of the feature quantity will be described later. The unit space U for the first discriminator 11 is set based on a reference data group obtained when the road surface is rough and no misfire occurs. When the calculated Mahalanobis' distance MD is smaller than a predetermined determination threshold, the first discriminator 11 determines that the road surface is not flat, and when the calculated Mahalanobis' distance MD is equal to or larger than the predetermined determination threshold, the first discriminator 11 determines that the road surface is flat.

The first discriminator 11 samples a feature quantity of at least one type indicating a feature of fluctuation of the engine rotation speed ES, from the data of the engine rotation speed ES in a first determination period. The length of the first determination period may be set regardless of the engine rotation speed ES, or may be set in accordance with the engine rotation speed ES. The first determination period may be, for example, a duration of about one second. The feature quantity of at least one type is, for example, a first feature quantity indicating the magnitude of a fluctuation amount of the engine rotation speed ES and a second feature quantity indicating the frequency of fluctuation of the engine rotation speed ES. The first feature quantity may be, for example, a difference between the maximum value and the minimum value per each first unit period in the first determination period. The first unit period may be, for example, a duration of about 10 to 30 msec. The second feature quantity may be, for example, a standard deviation of a differential value per each second unit period in the first determination period. The length of the second unit period may be identical with or different from the length of the first unit period. The second unit period may be, for example, a duration of about 10 to 30 msec. The second unit period may be set in accordance with the cycle of fluctuation of the engine rotation speed ES in such a way that the differential value appears as a large value.

The first discriminator 11 samples a feature quantity of at least one type indicating a feature of fluctuation of the vehicle speed VS (or the rotation speed of the wheel 31) from the data of the vehicle speed VS (or the rotation speed of the wheel 31) during the first determination period. The feature quantity of at least one type is, for example, a first feature quantity indicating the magnitude of a fluctuation amount of the vehicle speed VS and a second feature quantity indicating the frequency of fluctuation of the vehicle speed VS. A specific example of the first feature quantity may be identical with the above-described specific example of the first feature quantity indicating the magnitude of the fluctuation amount of the engine rotation speed ES. A specific example of the second feature quantity may be identical with the above-described specific example of the second feature quantity indicating the frequency of fluctuation in the engine rotation speed ES.

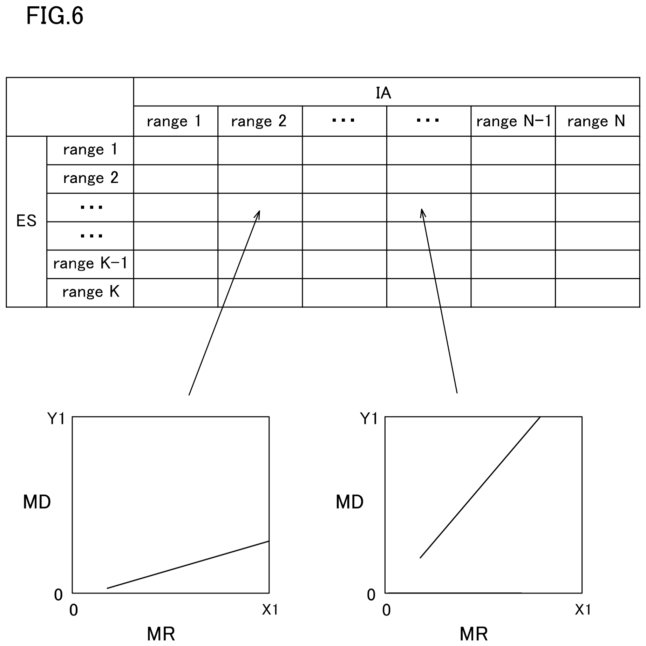

As a second parameter set D2 selected from obtained physical parameters, the second discriminator 12 that is an intermittent misfire identification discriminator obtains a calculated or detected intake air amount IA and engine rotation speed ES obtained from a signal of the engine rotation speed sensor 51. Being similar to the engine rotation speed ES obtained by the first discriminator 11, the engine rotation speed ES obtained by the second discriminator 12 may be a value at each crank angle, which is larger than a crank angle interval at which the engine rotation speed sensor 51 outputs a signal. The second discriminator 12 samples feature quantities of plural types from the second parameter set D2, and calculates a Mahalanobis' distance MD based on the sampled feature quantities of the plural types and a unit space U set in advance. A specific example of the feature quantity will be described later. The unit space U for the second discriminator 12 is set based on a reference data group obtained when the road surface is flat and no misfire occurs. The second discriminator 12 estimates a misfire rate MR based on the calculated Mahalanobis' distance MD. Because the unit space U is set based on a reference data group obtained when no misfire occurs, it is possible to estimate the misfire rate MR based on the Mahalanobis' distance MD. The misfire rate MR indicates the ratio of the number of time of misfire to the accumulative number of time of rotation of the crankshaft 42. The second discriminator 12 may estimate the misfire rate MR based on the Mahalanobis' distance MD and a value regarding the engine load. In this case, the storage device 3 stores a map indicating the relationship between a Mahalanobis' distance MD and a misfire rate MR for each engine load range in advance. The value regarding the engine load is, for example, an intake air amount IA. The second discriminator 12 may estimate the misfire rate MR based on the Mahalanobis' distance MD, a value regarding the engine load, and engine rotation speed ES. In this case, the storage device 3 stores a map indicating the relationship between a Mahalanobis' distance MD and a misfire rate MR for each engine driving range in advance, as shown in FIG. 6, for example. The engine driving range is a combination of an engine load range and an engine rotation speed range. FIG. 6 displays graphs showing the relationship between a Mahalanobis' distance MD and a misfire rate MR, which are set for two given engine driving ranges. It is noted that a value X1 on the horizontal axis indicating the misfire rate MR is identical between the two graphs, and a value Y1 on the vertical axis indicating the Mahalanobis' distance MD are identical between the two graphs. When an estimated misfire rate MR is larger than a predetermined misfire rate determination threshold, the second discriminator 12 determines that intermittent misfire is occurring, and when the estimated misfire rate MR is equal to or smaller than the misfire rate determination threshold, the second discriminator 12 determines that intermittent misfire does not occur. The second discriminator 12 determines that the engine 40 is in the misfire state when it is determined that intermittent misfiring is occurring, and outputs an identification signal indicating that the engine 40 is in the misfire state to a notification lamp (not illustrated).

The second discriminator 12 samples a feature quantity of at least one type indicating a feature of fluctuation of the engine rotation speed ES, from the data of the engine rotation speed ES in a second determination period. The length of the second determination period may be identical with or different from the length of the first determination period. The length of the second determination period may be set regardless of the engine rotation speed ES, or may be set in accordance with the engine rotation speed ES. The feature quantity of at least one type is, for example, a feature quantity indicating the frequency of fluctuation and the magnitude of fluctuation of the engine rotation speed ES. The feature quantity indicating the frequency of fluctuation of the engine rotation speed ES may be, for example, a standard deviation of a differential value per unit period in the second determination period. The feature quantity of at least one type may be plural standard deviations that are different in length in the unit period. When the feature quantities are plural standard deviations that are different in length in the unit period, the feature quantities indicate the magnitudes of fluctuation amounts of the engine rotation speed ES. For example, the feature quantity of at least one type may be a standard deviation of a differential value per 10 msec in the second determination period, a standard deviation of a differential value per 20 msec in the second determination period, and a standard deviation of a differential value per 30 msec in the second determination period. The second discriminator 12 may obtain at least part of feature quantities of plural types sampled from data of engine rotation speed ES by the first discriminator 11, as part of the second parameter set D2.

The second discriminator 12 samples a feature quantity of at least one type from data of the intake air amount IA in the second determination period. The feature quantity of at least one type is, for example, a representative value of the intake air amount IA in the second determination period. The representative value may be an average value, for example.

As a third parameter set D3 selected from obtained physical parameters, the third discriminator 13 which is a continuous misfire identification discriminator obtains a throttle opening degree TH obtained from a signal of the throttle opening degree sensor 52, vehicle speed VS obtained from a signal of the wheel rotation speed sensor 55, and a feedback correction coefficient FB set based on a signal of the oxygen sensor 54. Instead of the vehicle speed VS, the third discriminator 13 may obtain the rotation speed of the wheel 31 obtained from a signal of the wheel rotation speed sensor 55. The third discriminator 13 may obtain a value of a signal of the oxygen sensor 54 instead of the feedback correction coefficient FB. The third discriminator 13 samples feature quantities of plural types from the third parameter set D3, and calculates a Mahalanobis' distance MD based on the sampled feature quantities of the plural types and a unit space U set in advance. A specific example of the feature quantity will be described later. The unit space U for the third discriminator 13 is set based on a reference data group obtained when the road surface is flat and no misfire occurs. When the calculated Mahalanobis' distance MD is larger than a predetermined threshold larger than 1, the third discriminator 13 determines that continuous misfire is occurring, and when the calculated Mahalanobis' distance MD is smaller than the threshold, the third discriminator 13 determines that continuous misfire does not occur. The unit space U for the third discriminator 13 may be set based on a reference data group which is obtained when the road surface is flat and continuous misfire is occurring. When the calculated Mahalanobis' distance MD is smaller than a predetermined threshold around 1, the third discriminator 13 determines that continuous misfire is occurring, and when the calculated Mahalanobis' distance MD is larger than the threshold, the third discriminator 13 determines that continuous misfire does not occur. No matter which the unit space U is set, the reference data group is preferably a data group obtained when the vehicle speed VS is maintained to be constant. The disclosure, however, is not limited to this. When continuous misfire is occurring, the third discriminator 13 determines that the engine 40 is in the misfire state, and outputs an identification signal indicating that the engine 40 is in the misfire state to a notification lamp (not illustrated). When it is determined that continuous misfire is occurring, the third discriminator 13 may output information of a misfire rate MR estimated based on the number of cylinders of the engine 40 to an output target other than the notification lamp, in addition to the output of the identification signal. For example, when the engine 40 is a four-cylinder engine and continuous misfire is occurring, because continuous misfire is occurring in at least one of the four cylinders, the misfire rate MR is estimated to be at least 25%. The above-described misfire rate determination threshold used by the second discriminator 12 that is an intermittent misfire identification discriminator is lower than a misfire rate when continuous misfire occurs in one cylinder of the engine 40 having a typical number of cylinders. When the third discriminator 13 is configured to output information of a misfire rate MR in a case where it is determined that the engine 40 is in the misfire state, the second discriminator 12 is configured to output information of an estimated misfire rate MR when it is determined that the engine 40 is in the misfire state.

The third discriminator 13 samples a feature quantity of at least one type indicating the magnitude of the throttle opening degree TH relative to the vehicle speed VS from the data of the throttle opening degree TH and the data of the vehicle speed VS (or the rotation speed of the wheel 31) in a third determination period. The length of the third determination period may be identical with or different from the length of at least one of the first determination period or the second determination period. The length of the third determination period may be set regardless of the engine rotation speed ES, or may be set in accordance with the engine rotation speed ES. The feature quantity of at least one type may be, for example, a value calculated by dividing an average value of the throttle opening degree TH in a third diagnosis period by an average value of the vehicle speed VS in the third diagnosis period.

The third discriminator 13 samples a feature quantity indicating a feature of fluctuation of the feedback correction coefficient FB (or a value of a signal of the oxygen sensor 54) from the data of the feedback correction coefficient FB (or the value of the signal of the oxygen sensor 54) in the third determination period. The feature quantity indicating the feature of fluctuation of the feedback correction coefficient FB (or a value of a signal of the oxygen sensor 54) is, for example, a representative value (feature quantity) of the feedback correction coefficient FB (or the value of the signal of the oxygen sensor 54) in the third determination period and a feature quantity indicating the frequency of fluctuation of the feedback correction coefficient FB (or the value of the signal of the oxygen sensor 54) in the third determination period. The representative value may be an average value, for example. The feature quantity indicating the frequency of fluctuation of the feedback correction coefficient FB (or the value of the signal of the oxygen sensor 54) in the third determination period may be, for example, a standard deviation of a differential value per unit period in the third determination period. The unit period is set so as to be shorter than a cycle of fluctuation of the feedback correction coefficient FB. It is therefore possible to sample the feature quantity indicating the frequency of fluctuation of the feedback correction coefficient FB. The unit period may be, for example, a duration of about 10 to 30 msec. The cycle of fluctuation of the feedback correction coefficient FB is typically equal to or longer than 100 msec.

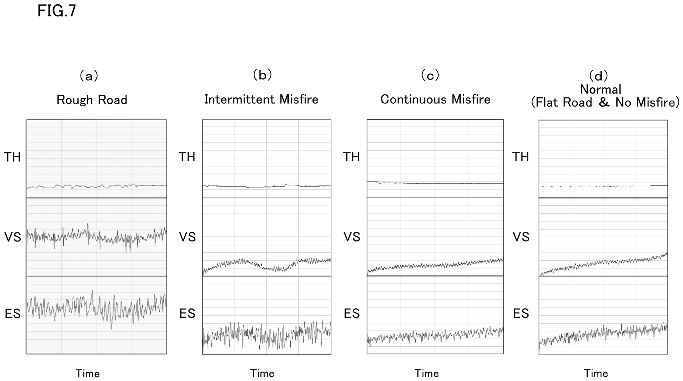

FIG. 7(a) to FIG. 7(d) are graphs showing changes over time of the throttle opening degree TH obtained from a signal of the throttle opening degree sensor 52, the vehicle speed VS obtained from a signal of the wheel rotation speed sensor 55, and the engine rotation speed ES obtained from a signal of the engine rotation speed sensor 51. FIG. 7(a) to FIG. 7(d) are identical with each other in terms of the range of values on the vertical axis of the graph of the throttle opening degree TH. FIG. 7(a) to FIG. 7(d) are identical with each other in terms of the difference between the upper limit value and the lower limit value on the graph of the vehicle speed VS. FIG. 7(a) to FIG. 7(d) are also identical with each other in terms of the difference between the upper limit value and the lower limit value on the graph of the engine rotation speed ES. In

FIG. 7(a) to FIG. 7(d), the graph of the engine rotation speed ES is a graph of values per 720° CA. The time range in the graphs of FIG. 7(a) to FIG. 7(d) is about 10 seconds. FIG. 7(a) is a graph when the road surface is rough. FIG. 7(b) is a graph when intermittent misfire is occurring. FIG. 7(c) is a graph when continuous misfire is occurring. FIG. 7(d) is a graph in a normal state. In the present embodiment, the normal state indicates that no misfire is occurring and the road surface is flat.

As shown in FIG. 7(a) to FIG. 7(d), irrespective of the occurrence of misfire, the engine rotation speed ES fluctuates as if vibrating in accordance with a timing of a specific process (e.g., a combustion process) in one cycle of the engine 40. As shown in FIG. 7(b) and FIG. 7(d), when the intermittent misfire occurs, the amount of fluctuates of the engine rotation speed ES becomes large as compared to the normal state. To put it differently, the amplitude of fluctuation of the engine rotation speed ES becomes large. This is because the engine rotation speed ES decreases at the moment of occurrence of intermittent misfire, and when the ignition returns to normal immediately after the occurrence of intermittent misfire, the engine rotation speed ES increases as compared to the normal state.

As shown in FIG. 7(a) and FIG. 7(d), when the road surface is rough, the contact state between the wheel 31 and the road surface is inconsistent, and the amount of fluctuation of the rotation speed of the wheel 31 is large as the vehicle moves away from and strongly makes contact with the road surface. As a result, in regard to the crankshaft 42 connected to the driving wheel among the wheels 31, the amount of fluctuation of the engine rotation speed ES becomes large due to an influence of the fluctuation of the rotation speed of the wheel 31.

As shown in FIG. 7(a) and FIG. 7(b), the variation of the engine rotation speed ES when the road surface is rough resembles the fluctuation of the engine rotation speed ES when intermittent misfire is occurring. On the other hand, the fluctuation of the rotation speed of the wheel 31 is different between when the road surface is rough and when intermittent misfire is occurring. Due to this, it is possible to discern running on a rough road surface from intermittent misfire based on data of the engine rotation speed ES and data of either the rotation speed of the wheel 31 or the vehicle speed VS calculated from the rotation speed of the wheel 31. However, when the unit space U for the first discriminator 11 is set based on a reference data group obtained when the road surface is flat and no misfire occurs, the Mahalanobis' distance MD is a large value not only when the road surface is rough but also when intermittent misfire is occurring. On this account, when the first discriminator 11 performs determination as to whether the road surface is flat or determination as to whether intermittent misfire is occurring based on the above-described unit space U, the Mahalanobis' distance is a large value both when the road surface is rough and when intermittent misfire is occurring. Consequently, it is not possible to correctly determine whether the road surface is flat. In the present embodiment, the unit space U for the first discriminator 11 is set based on a reference data group obtained when the road surface is rough and no misfire occurs. Due to this, it is possible to avoid erroneous determination by the first discriminator 11 that the road surface is not flat when intermittent misfire is occurring. In the present embodiment, after the first discriminator 11 determines that the road surface is flat, the second discriminator 12 determines whether intermittent misfire is occurring. On this account, even if the unit space U for the second discriminator 12 is set based on a reference data group obtained when the road surface is flat and no misfire occurs, the second discriminator 12 can correctly determine whether intermittent misfire is occurring.

When continuous misfire occurs, the fluctuation in the engine rotation speed ES differs from that in the normal state. However, as shown in FIG. 7(c) and FIG. 7(d), the difference cannot be discerned based on the data of the engine rotation speed ES per 720° CA. Due to this, in known misfire diagnosis, data of engine rotation speed ES having high temporal resolution was used. In the known misfire diagnosis, data of engine rotation speed ES per 15° CA was used, for example. On the other hand, in the present embodiment, the determination of whether continuous misfire is occurring does not use the engine rotation speed ES.

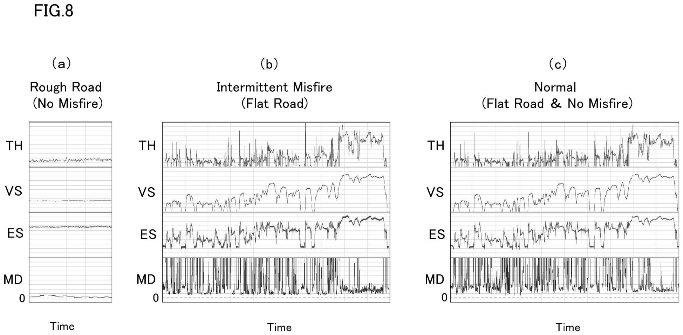

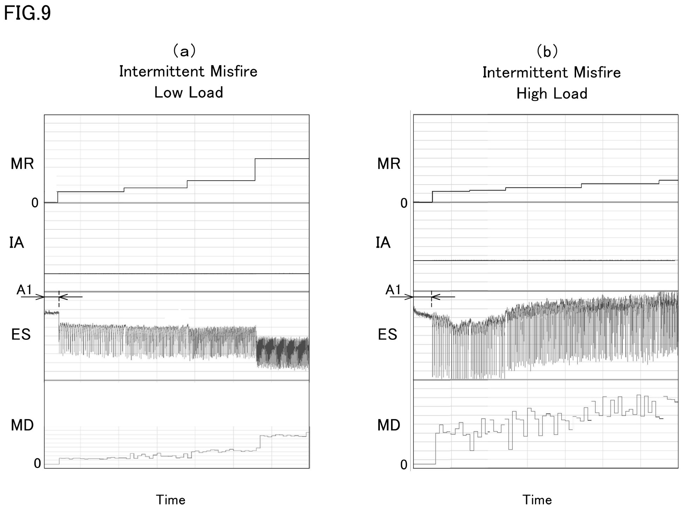

FIG. 8(a) to FIG. 8(c) are graphs showing changes over time of the throttle opening degree TH obtained from a signal of the throttle opening degree sensor 52, the vehicle speed VS obtained from a signal of the wheel rotation speed sensor 55, the engine rotation speed ES obtained from a signal of the engine rotation speed sensor 51, and the Mahalanobis' distance MD calculated by the first discriminator 11. In a strict sense, the vertical axis of the graph of the Mahalanobis' distance MD in each of FIG. 8(a) to FIG. 8(c) indicates a squared value of the Mahalanobis' distance. The same applies to the vertical axis of the graph of the Mahalanobis' distance MD in each of FIG. 9(a), FIG. 9(b), FIG. 10, FIG. 11(a), FIG. 11(b), and FIG. 12 described later. The upper limit value of the vertical axis of the graph of the Mahalanobis' distance MD in each of FIG. 8(a) to FIG. 8(c) is 45. FIG. 8(a) to FIG. 8(c) are identical with each other in terms of the range of values of the vertical axis on the graph of the throttle opening degree TH. In the same manner as the graph of the throttle opening degree TH, the graph of the vehicle speed VS and the graph of the engine rotation speed ES in each of FIG. 8(a) to FIG. 8(c) are identical with each other in terms of the range of values of the vertical axis. The time range of the graph of each of FIG. 8(b) and FIG. 8(c) is about 30 minutes. Each of FIG. 8(b) and FIG. 8(c) is a graph showing values after the vehicle 30 starts running, and the vehicle 30 is driven so that the variation of the vehicle speed VS is identical between FIG. 8(b) and FIG. 8(c). FIG. 8(a) is a graph when the road surface is rough and no misfire occurs. FIG. 8(b) is a graph when the road surface is flat and intermittent misfire is occurring. FIG. 8(c) is a graph in the normal state. As shown in FIG. 8(a), when the road surface is rough, the Mahalanobis' distance MD calculated by the first discriminator 11 varies around 1. On the other hand, as shown in FIG. 8(b) and FIG. 8(c), when the road surface is flat, the Mahalanobis' distance MD calculated by the first discriminator 11 varies in a range of larger than 1, irrespective of whether misfire occurs.

FIG. 9(a) and FIG. 9(b) are graphs showing changes over time of a misfire rate MR, an intake air amount IA, engine rotation speed ES, and Mahalanobis' distance MD calculated by the second discriminator 12, when the engine 40 is driven such that intermittent misfire occurs at a predetermined misfire rate MR. The upper limit value of the vertical axis of the graph of the Mahalanobis' distance MD in each of FIG. 9(a) and FIG. 9(b) is 19000. FIG. 9(a) and FIG. 9(b) are identical with each other in terms of the range of values of the vertical axis on the graph of the misfire rate MR. The graph of the intake air amount IA and the graph of the engine rotation speed ES in FIG. 9(a) and FIG. 9(b) are identical with each other in terms of the range of values of the vertical axis, in the same manner as the graph of the misfire rate MR. The time range in the graphs of FIG. 9(a) and FIG. 9(b) is about 1 minute. FIG. 9(a) is a graph when the engine load is low. FIG. 9(b) is a graph when the engine load is high. In FIG. 9(a) and FIG. 9(b), misfire has not occurred yet in a period A1. As a comparison between FIG. 9(a) and FIG. 9(b) shows, when the load is high, the amount of fluctuation of the engine rotation speed ES while intermittent misfire is occurring is large as compared to when the load is low. In other words, the engine load correlates to the amount of fluctuation of the engine rotation speed ES while intermittent misfire is occurring. As shown in FIG. 9(a) and FIG. 9(b), the magnitude of the amount of fluctuation of the engine rotation speed ES does not correlate to the misfire rate MR. The higher the misfire rate MR, the shorter the time intervals between misfires. On this account, the frequency of fluctuation of the engine rotation speed ES increases as the misfire rate MR increases. When the frequency of fluctuation of the engine rotation speed ES is high, the degree of concentration of lines is high in the graph of the engine rotation speed ES.

The second discriminator 12 of the present embodiment obtains an intake air amount IA and engine rotation speed ES as a second parameter set D2, samples a feature quantity of the frequency of fluctuation of the engine rotation speed ES from data of the engine rotation speed ES, and calculates a Mahalanobis' distance MD based on the sampled feature quantity of the frequency of fluctuation of the engine rotation speed ES, a representative value (feature quantity) of the intake air amount IA, and a unit space U. As shown in FIG. 9(a) and FIG. 8(b), the higher the misfire rate MR, the longer the Mahalanobis' distance MD. It is therefore possible to estimate the misfire rate MR by using the calcuated Mahalanobis' distance MD. Although the intake air amount IA is included in the second parameter set D2, as shown in FIG. 9(a) and FIG. 9(b), the Mahalanobis' distance MD varies on account of a difference in engine load, even if the misfire rate MR is the same. It is therefore possible to accurately estimate the misfire rate MR by estimating the misfire rate MR by using the calculated Mahalanobis' distance and a value related to the engine load (e.g., the intake air amount IA). Furthermore, it is possible to further accurately estimate the misfire rate MR by estimating the misfire rate MR by using the calculated Mahalanobis' distance, a value related to the engine load (e.g., the intake air amount IA), and the engine rotation speed ES.

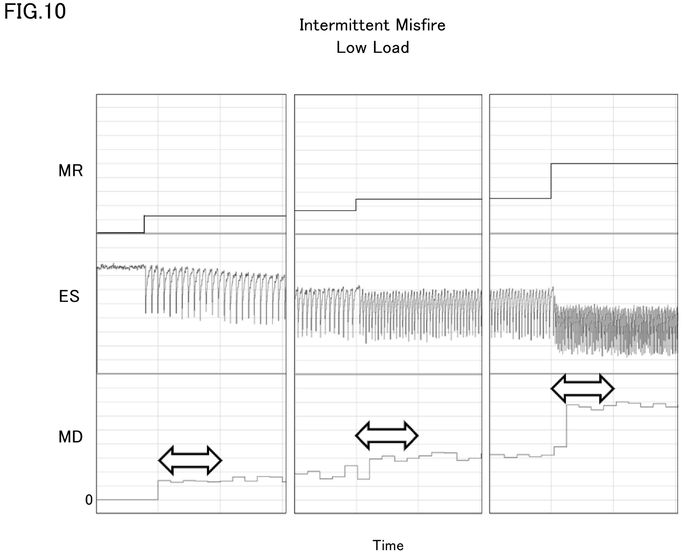

FIG. 10 is a graph in which three areas where the misfire rate is different are extracted from three graphs in FIG. 9(a) excluding the intake air amount IA, and the extracted areas are enlarged in the horizontal axial direction. The upper limit value of the vertical axis of the graph of the Mahalanobis' distance MD in FIG. 10 is 9000. The period indicated by an arrow in FIG. 10 indicates, for example, a time range of five seconds. When the above-described second determination period is, for example, one second, the Mahalanobis' distance MD may not be stable when one second or two seconds elapses from a change of the misfire rate MR. However, after about five seconds from the change of the misfire rate MR, the second discriminator 12 can determine that intermittent misfire is occurring and accurately estimate the misfire rate MR, irrespective of the engine load.

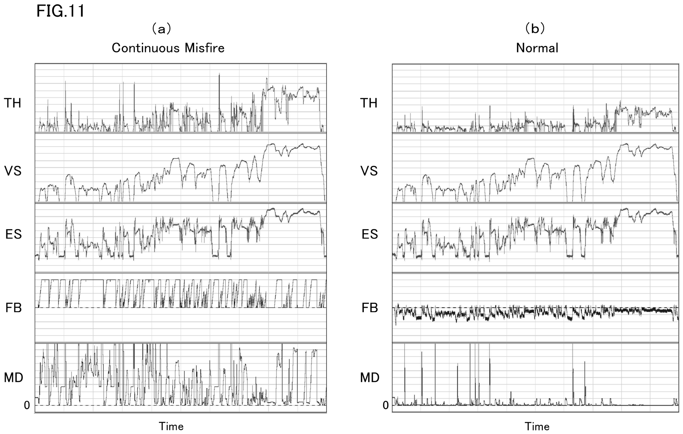

FIG. 11(a) and FIG. 11(b) are graphs showing changes over time of a throttle opening degree TH from the start of the running of the vehicle 30, vehicle speed VS, engine rotation speed ES, a feedback correction coefficient FB, and a Mahalanobis' distance which is calculated by the third discriminator 13. The upper limit value of the vertical axis of the graph of the Mahalanobis' distance MD in each of FIG. 11(a) and FIG. 11(b) is 900. FIG. 11(a) and FIG. 11(b) are identical with each other in terms of the range of values of the vertical axis on the graph of the throttle opening degree TH. The graph of the vehicle speed VS, the graph of the engine rotation speed ES, and the graph of the feedback correction coefficient FB in FIG. 11(a) and FIG. 11(b) are identical with each other in terms of the range of values of the vertical axis, in the same manner as the graph of the throttle opening degree TH. In the examples shown in FIG. 11(a) and FIG. 11(b), the unit space U for the third discriminator 13 is set based on a reference data group obtained when the road surface is flat and no misfire occurs. The time range in the graphs of FIG. 11(a) and FIG. 11(b) is about 30 minutes. FIG. 11(a) is a graph when continuous misfire is occurring. FIG. 11(b) is a graph in the normal state. In FIG. 11(a) and FIG. 11(b), the vehicle 30 is driven so that the variation of the vehicle speed VS is identical between them. When continuous misfire is occurring, the output of the engine 40 decreases as compared to the normal state. Due to this, as shown in FIG. 11(a) and FIG. 11(b), when continuous misfire is occurring, the throttle opening degree TH is large as compared to the normal state, even if the vehicle speed VS is the same. When continuous misfire is occurring, furthermore, the feedback correction coefficient FB is high as compared to the normal state. In FIG. 11(a), a period in which the feedback correction coefficient FB is maintained at the upper limit value is long. To put it differently, the frequency of fluctuation of the feedback correction coefficient FB is low. The feedback correction coefficient FB is high because an air-fuel mixture is not combusted in a particular cylinder due to the continuous misfire, and the oxygen sensor 54 keeps outputting a signal indicating that the oxygen concentration is higher than a predetermined oxygen concentration range even after the fuel amount is increased. In consideration of such behavior of the physical quantity at the time of the occurrence of continuous misfire, the third discriminator 13 of the present embodiment determines whether continuous misfire is occurring by using the vehicle speed VS (or the rotation speed of the wheel 31), the throttle opening degree TH, and the feedback correction coefficient FB (or a signal of the oxygen sensor 54). As shown in FIG. 11(a), when continuous misfire is occurring, the Mahalanobis' distance MD is in a range that is significantly larger than 1. On the other hand, as shown in FIG. 11(b), when continuous misfire does not occur, the Mahalanobis' distance MD is in a range around 1. In FIG. 11(b), there are parts where the Mahalanobis' distance MD is temporarily significantly larger than 1. These parts indicate rapid increase in the throttle opening degree TH due to vehicle start or a gear change.

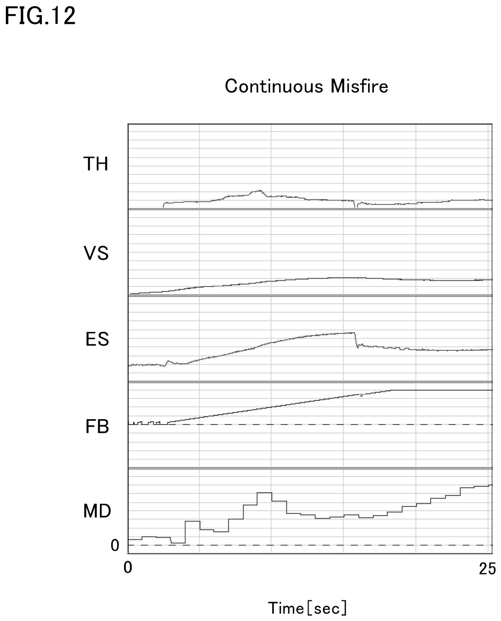

FIG. 12 is a graph in which an area of 25 seconds from the start of the running of the vehicle 30 in FIG. 11(a) is enlarged in the horizontal axial direction. The upper limit value of the vertical axis of the graph of the Mahalanobis' distance MD in FIG. 12 is 900. In FIG. 11(a), FIG. 11(b), and FIG. 12, the vehicle 30 is stopped in an idling state before the start of the running, and the throttle opening degree TH is minimum even after five seconds from the start of the running. Due to this, when continuous misfire is occurring, the feedback correction coefficient FB starts to increase after about five seconds from the start of the running of the vehicle 30, and the Mahalanobis' distance MD becomes slightly higher than 1. After about 10 seconds from the start of the running of the vehicle 30, the Mahalanobis' distance MD becomes stable at a value clearly higher than 1. For this reason, in the examples shown in FIG. 11(a) and FIG. 12, when, for example, the above-described third determination period is one second, after about 10 seconds from the start of the running of the vehicle 30, the third discriminator 13 is able to correctly determine that the engine 40 is in the misfire state and to accurately estimate the misfire rate MR.

The determination threshold of the misfire rate MR, which is a reference for determining whether the engine 40 is in the misfire state, may be a low value such as 3%, for example. According to a known method of calculating the misfire rate MR by counting the number of times of misfire, the number of times of misfire per 1000 rotations of the crankshaft 42 is counted to ensure the accuracy of the misfire rate MR. Furthermore, in order to ensure the accuracy, a period in which the engine rotation speed ES varies due to a variation of the throttle opening degree TH is excluded. Due to this, in the known misfire diagnosis not using the MT method, a diagnosis period of about several tens of seconds is required to complete 1000 rotations, when the engine rotation speed ES is low.

By focusing on a difference "in appearance" when a physical quantity regarding the driving state of the vehicle 30 is plotted on a graph, the state identification device 1 of the present embodiment diagnoses misfire by quantifying the appearance by means of the MT method that is a pattern recognition technology. The first discriminator 11 and the second discriminator 12 are therefore able to perform a determination without using data of engine rotation speed ES having high temporal resolution, which is used in the known misfire diagnosis that does not use the MT method. The third discriminator 13 is able to perform a determination without using the data of the engine rotation speed ES. Furthermore, the third discriminator 13 is able to perform a determination without using data having high temporal resolution, which is used in the known misfire diagnosis that does not use the MT method. It is therefore possible to significantly reduce the computational load in comparison with the known misfire diagnosis not using the MT method.

In addition to the above, the state identification device 1 of the Second Embodiment is arranged so that three discriminators 10 independently perform a determination by using the MT method, in order to determine whether the engine 40 is in the misfire state. On this account, in order to determine whether the engine is in the misfire state, the computation performed by each discriminator 10 is simplified in comparison with the state identification device of Patent Literature 4 in which one discriminator performs determination by using the MT method. It is therefore possible to suppress the computational load of the entire state identification device 1. Consequently, it is possible to further increase the degree of freedom in designing the hardware resources of the state identification device 1 while further improving the identification accuracy.

Because the three discriminators 10 of the present embodiment perform a determination by using the MT method, the lengths of the first determination period, the second determination period, and the third determination period described above can be significantly shortened in comparison with a determination period in the known misfire diagnosis without using the MT method. On this account, the state identification device 1 of the Second Embodiment is therefore able to determine whether the engine 40 is in the misfire state and to accurately estimate the misfire rate MR in real time.

The multiple discriminators 10 operated by the processor 2 of the state identification device 1 of the First Embodiment may include at least one non-MT discriminator (not illustrated) performing a determination without using the MT method, in addition to the first to third discriminators 11 to 13 performing a determination by using the MT method.

In the Second Embodiment, each of the determination of intermittent misfire, the determination of continuous misfire, and the determination of the flat road uses the MT method. Alternatively, the MT method may be used in two of the determinations of intermittent misfire, the determination of continuous misfire, and the determination of the flat road, and the MT method may not be used in the remaining one determination. For example, the MT method may be used in the determination of intermittent misfire and the determination of continuous misfire, and the MT method may not be used in the determination of the flat road. Alternatively, the MT method may be used in the determination of intermittent misfire and the determination of the flat road, and the MT method may not be used in the determination of continuous misfire. Alternatively, the MT method may be used in the determination of continuous misfire and the determination of the flat road, and the MT method may not be used in the determination of intermittent misfire.

While the state identification device 1 is provided in the vehicle 30 in the Second Embodiment, the state identification device of the present teaching may be a state identification device which is not provided in the vehicle and is able to communicate with a device mounted on the vehicle, when the state identification device is used for outputting an identification signal indicating whether the engine mounted on the vehicle is in the misfire state.

Monitoring targets of the state identification device of the present teaching may be, for example, quality management systems for manufacturing lines, equipment diagnostic systems for large-scale plants, driving control systems for automobiles and airplanes, and error detection systems for data centers. When a quality management system for a manufacturing line is a monitoring target, the state identification device of the present teaching is, for example, configured to perform real time valuation of plural quality parameters by plural discriminators. To be more specific, the state identification device is connected to a camera for obtaining image data and includes a first discriminator which is configured to find defective products by appearance inspection and a second discriminator which is configured to find defective products by size inspection. Based on results of determinations in the step S21 and the step S22 performed in the order shown in FIG. 2(c), an identification signal indicating a defective product is output in the step S3. This makes it possible to achieve continuous monitoring of product quality in a high-speed production process and to reduce manufacturing costs by early detection of defective products.

When an equipment diagnostic system for a large-scale plant is a monitoring target, the state identification device of the present teaching is configured to, for example, perform real time analysis of a large number of sets of sensor data (i.e., data of a temperature sensor, a pressure sensor, a flow rate sensor, and a vibration sensor) by plural discriminators. It is therefore possible to perform early detection of equipment anomaly and state monitoring for preventive maintenance. When a driving control system for an automobile or an airplane is a monitoring target, the state identification device of the present teaching is, for example, configured to perform real time processing of a large number of sets of sensor information by plural discriminators. This makes it possible to prompt detection of the abnormal state of the driving control system, and to achieve speed-up of the control. When an error detection system for a data center is a monitoring target, the state identification device of the present teaching is, for example, configured to always monitor the server state by plural discriminators. This makes it possible to perform abnormality detection in network traffic, and efficient use of the system resources. Also for these monitoring targets, by using the state identification device of the present teaching, which is configured to identify the state of a monitoring target by using discriminators using the MT method, it is possible to further improve the degree of freedom in designing hardware resources by further improving the efficiency of an identification process, while maintaining high identification accuracy. Monitoring targets of the state identification device of the present teaching may be, for example, multistage quality detection systems for manufacturing lines, security systems for multistage abnormality detection, and medical diagnosis systems for multistage symptom assessment.

### [Reference Signs List]

1: state identification device, 2: processor, 3: storage device, 10: discriminator, 11: first discriminator, 12: second discriminator, 13: third discriminator, 30: vehicle, 40: engine, 50, 51, 52, 53: detector, D: parameter set, MD: Mahalanobis' distance, P: program, U: unit space

## Claims

1. A state identification device configured to output an identification signal indicating whether a state of a monitoring target belongs to a single predetermined state,
the state identification device comprising a processor and a storage device operably coupled with the processor,
the storage device storing a program executed by the processor,
the program causing the state identification device to:
(A) obtain plural physical parameters from at least one detector monitoring the monitoring target;
(B) perform a determination by plural discriminators by using the obtained physical parameters; and
(C) output an identification signal indicating whether the state of the monitoring target belongs to the single predetermined state based on a determination result of at least one of the discriminators,
the discriminators including at least a first discriminator and a second discriminator which are using a Mahalanobis-Taguchi Method,
the first discriminator being a discriminator configured to
determine whether a first condition is satisfied by calculating a Mahalanobis' distance of a first parameter set selected from the obtained physical parameters and comparing the calculated Mahalanobis' distance with a first threshold, in a first unit space composed of a first average vector and a first variance-covariance matrix which are calculated in advance, and
shift an operation such that a process performed by the state identification device is terminated without going through both a process performed by any of the discriminators and a process of outputting the identification signal or such that a process performed by the first discriminator is looped, when a comparison result of the first discriminator is one of satisfaction and non-satisfaction of the first condition, and
the second discriminator being a discriminator configured to determine whether a second condition is satisfied by calculating a Mahalanobis' distance of a second parameter set selected from the obtained physical parameters and comparing the calculated Mahalanobis' distance with a second threshold, in a second unit space different from the first unit space and composed of a second average vector and a second variance-covariance matrix which are calculated in advance, and
the second discriminator being at least one of a discriminator (i) or a discriminator (ii),
the discriminator (i) being connected in series with the first discriminator and a shift to the discriminator (i) occurring after the process performed by the first discriminator, when the comparison result of the first discriminator is the other of the satisfaction and the non-satisfaction of the first condition, and
the discriminator (ii) is configured to shift the operation such that a process performed by the state identification device is terminated without shifting to the process performed by any of the discriminators and the process of outputting the identification signal or such that a process performed by the second discriminator is looped, when the comparison result is one of satisfaction and non-satisfaction of the second condition.

2. The state identification device according to claim 1, wherein, the second parameter set includes at least one of the physical parameters of the first parameter set.

3. The state identification device according to claim 1 or 2, wherein,
the state identification device outputs an identification signal indicating whether an engine mounted on a vehicle running on a road surface is in a misfire state,
the first discriminator is configured to determine whether the road surface is flat, and
the second discriminator determines whether intermittent misfire in which misfire intermittently occurs is occurring in one or more cylinders of the engine, the second discriminator is connected in series with the first discriminator, and a shift to the second discriminator and an execution of the second discriminator occur after the process performed by the first discriminator.

4. The state identification device according to claim 3, wherein,
when the first discriminator determines that the road surface is flat, the shift to the second discriminator occurs and the second discriminator determines whether the intermittent misfire is occurring in the engine, and
when the first discriminator determines that the road surface is rough, the first discriminator is configured to shift the operation such that the process performed by the state identification device is terminated without shifting to the process performed by the second discriminator and the process of outputting the identification signal or such that the process performed by the first discriminator is looped.
